# EUROPEAN PATENT APPLICATION

(11) **EP 4 560 394 A1**
(43) Date of publication of application: **28.05.2025**
(21) Application number: 23211629.3
(22) Date of filing: 23.11.2023
(51) Int. Cl.: G02F 1/35

(54) **SYSTEM AND METHOD FOR PROVIDING OUTPUT RADIATION**

(71) Applicant: ASML Netherlands B.V., 5500 AH Veldhoven (NL)
(72) Inventor: ROSCAM ABBING, Sylvianne, Dorothea, Christina, 5500 AH Veldhoven (NL); CAMPI, Filippo, 5500 AH Veldhoven (NL); O'DWYER, David, 5500 AH Veldhoven (NL); SMORENBURG, Petrus, Wilhelmus, 5500 AH Veldhoven (NL); REININK, Johan, 5500 AH Veldhoven (NL)
(74) Representative: ASML Netherlands B.V.

(57) **Abstract**

Described herein are systems and methods for providing output radiation, the systems and methods comprising broadening and/or temporally shortening radiation to produce the output radiation. The systems and methods may comprise broadening and/or temporally shortening two radiation beams having different wavelengths, for example a pump radiation beam and a converted (e.g. second harmonic) radiation beam.

## Description

### FIELD

The present invention relates to a system for receiving pump radiation and providing output radiation, a metrology apparatus comprising such a system, and a method of providing output radiation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k₁.

In lithographic processes, as well as other manufacturing processes, it is desirable frequently to make measurements of the structures created, e.g., for process control and verification. Various tools for making such measurements are known, including scanning electron microscopes, which are often used to measure critical dimension (CD), and specialized tools to measure overlay, the accuracy of alignment of two layers in a device. Recently, various forms of scatterometers have been developed for use in the lithographic field.

The manufacturing processes may be for example lithography, etching, deposition, chemical mechanical planarization, oxidation, ion implantation, diffusion or a combination of two or more of them.

Examples of known scatterometers often rely on provision of dedicated metrology targets. For example, a method may require a target in the form of a simple grating that is large enough that a measurement beam generates a spot that is smaller than the grating (i.e., the grating is underfilled). In so-called reconstruction methods, properties of the grating can be calculated by simulating interaction of scattered radiation with a mathematical model of the target structure. Parameters of the model are adjusted until the simulated interaction produces a diffraction pattern similar to that observed from the real target.

In addition to measurement of feature shapes by reconstruction, diffraction-based overlay can be measured using such apparatus, as described in published patent application US2006066855A1. Diffraction-based overlay metrology using dark-field imaging of the diffraction orders enables overlay measurements on smaller targets. These targets can be smaller than the illumination spot and may be surrounded by product structures on a wafer. Examples of dark field imaging metrology can be found in numerous published patent applications, such as for example US2011102753A1 and US20120044470A. Multiple gratings can be measured in one image, using a composite grating target. The known scatterometers tend to use light in the visible or near-infrared (IR) wave range, which requires the pitch of the grating to be much coarser than the actual product structures whose properties are actually of interest. Such product features may be defined using deep ultraviolet (DUV), extreme ultraviolet (EUV) or X-ray radiation having far shorter wavelengths. Unfortunately, such wavelengths are not normally available or usable for metrology.

On the other hand, the dimensions of modern product structures are so small that they cannot be imaged by optical metrology techniques. Small features include for example those formed by multiple patterning processes, and/or pitch-multiplication. Hence, targets used for high-volume metrology often use features that are much larger than the products whose overlay errors or critical dimensions are the property of interest. The measurement results are only indirectly related to the dimensions of the real product structures, and may be inaccurate because the metrology target does not suffer the same distortions under optical projection in the lithographic apparatus, and/or different processing in other steps of the manufacturing process. While scanning electron microscopy (SEM) is able to resolve these modern product structures directly, SEM is much more time consuming than optical measurements. Moreover, electrons are not able to penetrate through thick process layers, which makes them less suitable for metrology applications. Other techniques, such as measuring electrical properties using contact pads is also known, but it provides only indirect evidence of the true product structure.

By decreasing the wavelength of the radiation used during metrology it is possible to resolve smaller structures, to increase sensitivity to structural variations of the structures and/or penetrate further into the product structures. One such method of generating suitably high frequency radiation (e.g. hard X-ray, soft X-ray and/or EUV radiation) may be using a pump radiation (e.g., infrared IR radiation) to excite a generating/target medium, thereby generating an emitted radiation, optionally a high harmonic generation (HHG) comprising high frequency radiation.

In order to facilitate the ultrafast nonlinear optics, such as HHG, for generating the high frequency radiation, very short radiation pulses (e.g. ~ 10s of fs) are needed to achieve a high peak intensity during the nonlinear optical process. The conversion efficiency of a HHG process can be improved significantly if the process is driven using multicolor pulses, e.g. the fundamental wavelength and the second harmonic of the pump radiation, as demonstrated in Roscam Abbing, Sylvianne, et al. "Divergence and efficiency optimization in polarization-controlled two-color high-harmonic generation." Scientific Reports 11.1 (2021): 24253, the content of which is hereby incorporated by reference in its entirety.

However, further improvements in the efficiency of the conversion process for high frequency radiation generation are desirable.

### SUMMARY

One method of generating high frequency radiation for metrology applications includes the use of a nonlinear process such as high harmonic generation (HHG). Very short radiation pulses (e.g. ~ 10s of fs in duration) are required to achieve a high peak intensity during a HHG process. In some examples, generation of ~ 10 fs radiation pulses comprises spectrally broadening, and temporally compressing, sub-picosecond radiation pulses.

As mentioned above, it has been demonstrated that the HHG conversion efficiency can be significantly improved by driving the HHG process using radiation pulses of more than one wavelength (sometimes referred to as "multicolor" pulses), for example the fundamental wavelength of the pulses and the second harmonic. The second harmonic may be generated by a nonlinear process such as second harmonic generation (SHG). Usually, the second harmonic pulse is generated after the temporal compression of the fundamental pulse. In such a configuration, the second harmonic pulses will have a same or similar pulse length to that of the fundamental pulses, and the second harmonic radiation will inherit any other phase properties of the fundamental radiation beam.

Generating the second (or other) harmonic pulse after the temporal compression of the fundamental pulse leads to several effects that can be detrimental to the conversion efficiency of the generation of the second harmonic, and/or the high frequency radiation (e.g. by HHG).

For example, following the temporal compression of the fundamental pulse, the bandwidth of the fundamental pulse is usually very broad (e.g. the spectral full width at half maximum (FWHM) of the fundamental pulse may be around 40 nm), which can be detrimental to the phase matching of the frequency conversion process in SHG.

In addition, manipulation of the beam properties of femtosecond pulses is difficult; propagation through materials (e.g. dielectrics), as well as dispersion, will cause the pulses to be temporally stretched, and/or reduces their peak intensity.

The efficiency of the SHG generally depends linearly on the peak intensity of the driving pulses. For practical applications, peak intensities of 10-100 GW/cm² are targeted. Preferably, this peak intensity is achieved in a collimated beam (so as to minimize the need for further beam size manipulation via reflective optics, or via transmissive optics that induce dispersion). This high peak intensity requires a small beam size. In turn, a short pulse propagating through material in a small beam accumulates a significant amount of B-integral. B-integral is a measure of the nonlinear phase, and is in general detrimental to the spatial quality of the beam, which hinders the ability to focus the pulses.

In metrology applications, increasing the power of the radiation used for metrology leads to shorter measuring times.

There is therefore a need for an improved system for providing radiation for metrology, for example higher power radiation.

In brief, the present disclosure provides a system and a method for providing output radiation, which may be used in metrology applications, in which spectrally broadening pump radiation, and/or temporally shortening a pulse of pump radiation, takes place after generation of the converted radiation (e.g. the second harmonic radiation) for the second nonlinear process. The present disclosure also provides systems and methods for the spectral broadening, and the temporal compression of pulses, of multiple (e.g. two) beams of radiation having different wavelength spectra by a single spectral broadening element, and a single temporal compression element, respectively.

Described herein is a system for receiving pump radiation (e.g. pulsed pump radiation) and providing output radiation. The system may comprise: a first nonlinear optical component configured to convert a first portion of the pump radiation into converted radiation via a first nonlinear process, a spectral broadening stage configured to broaden a radiation spectrum of the converted radiation, and to broaden a radiation spectrum of a second portion of the pump radiation, a temporal compression stage configured to temporally shorten a pulse of the converted radiation, and to temporally shorten a pulse of the second portion of the pump radiation, and a second nonlinear optical component configured to receive the converted radiation and the second portion of the pump radiation, the second nonlinear optical component being further configured to generate output radiation via a second nonlinear process.

Also described herein is a method of providing output radiation. The method may comprise: receiving pulsed pump radiation, converting a first portion of the pump radiation into converted radiation via a first nonlinear process, spectrally broadening a second portion of the pump radiation, temporally shortening a pulse of the second portion of the pump radiation, spectrally broadening the converted radiation, temporally shortening a pulse of the converted radiation, and generating output radiation from the converted radiation and the second portion of the pump radiation via a second nonlinear process.

It will be understood that, in general according to the present disclosure, the first portion of the radiation is converted into converted radiation via the first nonlinear process before the converted radiation is spectrally broadened and temporally compressed.

The pump radiation may be produced by any suitable radiation source, for example a laser.

As used herein, "converted radiation" refers to radiation that is generated from the pump radiation by the first nonlinear process. The first and second portions of the pump radiation may be separated by e.g. a beam splitter.

In some examples, a hollow core optical fiber, and/or a multipass cell, may be employed in the spectral broadening of the radiation. For example, the spectral broadening stage may comprise a hollow core optical fiber, and/or a multipass cell.

In some examples, chirped mirrors, and/or prisms, may be employed in the temporal compression of the radiation. For example, the temporal compression stage may comprise one or more chirped mirrors.

Advantageously, the system and method described herein provides increased output radiation power in comparison to known systems and methods for generating radiation for metrology applications, in particular in the high frequency range (e.g. hard X-ray, soft X-ray, and/or EUV radiation), due to the improved conversion efficiency of the second nonlinear process. For example, the narrower bandwidth of the pump radiation (e.g. fundamental) may reduce or eliminate the effects of phase matching on the conversion efficiency of the first nonlinear process (e.g. SHG). Since the power of the output radiation generated by the second nonlinear process (e.g. HHG) depends on the intensities of the (second portion of the) pump radiation and the converted radiation, the increased converted radiation power will lead to an increased output radiation power.

In addition, the system and method described herein may enable each of the pump radiation and the converted radiation to be manipulated more easily, for example using transmissive optics, since the dispersive effects of the optics and materials used for beam manipulation may be negligible when applied to the radiation pulses before they have been temporally compressed (shortened). Manipulation of the radiation beams may be necessary, for example, to ensure that the beam paths, polarizations, etc. are optimized for the output radiation generation process (i.e. the second nonlinear process).

Furthermore, the system and method described herein may advantageously enable individual control of the temporal shape of the pump and converted radiation pulses, and/or individual tuning of the central wavelengths of the pump and converted radiation, since the pump and converted radiation are subject to separate broadening and compression stages.

For example, the system and method described herein could employ a shorter converted radiation pulse so that the second nonlinear process (e.g. HHG) is only enhanced for the center of the pump (e.g. fundamental) radiation pulse.

In some examples, the first nonlinear process comprises harmonic generation, such as SHG. For example, the first nonlinear optical component may comprise a SHG crystal, such as beta barium borate (BBO). In some examples, the first nonlinear process comprises generation of a higher order harmonic, e.g. third harmonic generation (THG), fourth harmonic generation (FHG), etc.

In some examples, the second nonlinear process comprises HHG. For example, the converted radiation and the second portion of the pump radiation may be directed towards the second nonlinear optical component which may comprise a HHG target (which may comprise a solid, a liquid, and/or a gas). For example, the second nonlinear optical component may comprise a gas target, a solid target, and/or a liquid target. For example, the second nonlinear optical component may comprise a gas jet/nozzle source. For example, the converted radiation and the second portion of the pump radiation may be focused inside a gas jet or nozzle source (e.g. an effusive argon gas jet).

A pulse duration of the pump radiation received by the system (e.g. generated by a laser) may be 100 fs or more. The pulse duration of the pump radiation received by the system may be sub-picosecond.

Following temporal shortening of the pulse of the second portion of the pump radiation (e.g. by the temporal compression stage), a pulse duration of the second portion of the pump radiation may be less than 40 fs, or less than 35 fs, less than 30 fs, less than 25 fs, less than 20 fs, less than 15 fs, less than 10 fs, or less than 5 fs.

Following temporal shortening of the pulse of the converted radiation (e.g. by the temporal compression stage), a pulse duration of the converted radiation may be less than 40 fs, less than 35 fs, less than 30 fs, less than 25 fs, less than 20 fs, less than 15 fs, less than 10 fs, or less than 5 fs.

The output radiation may comprise EUV, hard X-ray, and/or soft X-ray radiation.

The output radiation may include radiation having a wavelength in the range 1-100 nm. The output radiation may include radiation having a wavelength in the range 1-20 nm. It will be understood that the output radiation may also include radiation having wavelengths outside of this range. For example, the output radiation may comprise broadband radiation.

In some examples, the spectral broadening stage comprises a single spectral broadening element (e.g. a hollow core photonic crystal fiber, or a multipass cell) configured to receive both the converted radiation and the second portion of the pump radiation. Advantageously, such an arrangement may reduce the complexity of the system.

In some examples, the temporal compression stage comprises a single temporal compression element (e.g. a chirped-mirror compressor, or a prism compressor) configured to receive both the converted radiation and the second portion of the pump radiation.

Further advantageously, employing a single spectral broadening element and/or a single temporal compression element configured to receive both radiation beams means that both beams are directed aloing a same optical path. This may lead to a system with more stable relative timing between pulses of both beams. This property is particularly important for HHG with two beams of different wavelengths which relies on a fixed shape of the optical cycle of the two beams combined, requiring a stability of a few tens of nm of any part of the optical path that is not common to both beams.

In some examples, the spectral broadening stage comprises: a first spectral broadening element configured to receive the second portion of the pump radiation, and to broaden the radiation spectrum of the second portion of the pump radiation, and a second spectral broadening element configured to receive the converted radiation, and to broaden the radiation spectrum of the converted radiation.

In some examples, the temporal compression stage comprises: a first temporal compression element configured to receive the second portion of the pump radiation, and to temporally shorten the pulse of the second portion of the pump radiation, and a second temporal compression element configured to receive the converted radiation, and to temporally shorten the pulse of the converted radiation.

Additionally described herein is a metrology apparatus comprising one of more of the systems described herein.

It will be understood that the single spectral broadening element, and the single temporal compression element, configured to receive two radiation beams having different spectra need not necessarily form part of the system and apparatus described above.

For example, described herein is a system for receiving input radiation and providing output radiation, the system comprising a spectral broadening element, the spectral broadening element being configured to: receive first input radiation, the first input radiation having a first spectrum, receive second input radiation, the second input radiation having a second spectrum different from the first spectrum, broaden the first spectrum to produce first output radiation, the first output radiation having the broadened first spectrum, broaden the second spectrum to produce second output radiation, the second output radiation having the broadened second spectrum, and output the first output radiation and the second output radiation.

The spectral broadening element may comprise a hollow core optical fiber.

The system may comprise one or more optical elements arranged to direct the first input radiation and the second input radiation into the hollow core optical fiber. For example, the optical element may comprise a lens that is substantially transmissive to radiation having the first spectrum and to radiation having the second spectrum. In other examples, the optical element may comprise a focusing mirror that is substantially reflective to radiation having the first spectrum and to radiation having the second spectrum.

In some examples, the spectral broadening element comprises a multipass cell.

In some examples, the multipass cell comprises one or more mirrors, the one or more mirrors being substantially reflective to radiation having the first spectrum and to radiation having the second spectrum.

In some examples, the second input radiation corresponds to a harmonic (e.g. a second harmonic) of the first input radiation.

A method for providing output radiation is also described, the method comprising: receiving, by a spectral broadening element, first input radiation, the first input radiation having a first spectrum, receiving, by the spectral broadening element, second input radiation, the second input radiation having a second spectrum different from the first spectrum, and broadening, by the spectral broadening element, the first spectrum to produce first output radiation, the first output radiation having the broadened first spectrum, broadening, by the spectral broadening element, the second spectrum to produce second output radiation, the second output radiation having the broadened second spectrum, and outputting, by the spectral broadening element, the first output radiation and the second output radiation.

Also described herein is a system for receiving pulsed input radiation and providing output radiation, the system comprising a temporal compression element, the temporal compression element being configured to: receive first input radiation, the first input radiation having a first spectrum, receive second input radiation, the second input radiation having a second spectrum different from the first spectrum, temporally shorten a pulse of the first input radiation to produce first output radiation, temporally shorten a pulse of the second spectrum to produce second output radiation, and output the first output radiation and the second output radiation.

Also described herein is a method of providing output radiation, the method comprising: receiving, by a temporal compression element, first input radiation, the first input radiation being pulsed radiation, the first input radiation having a first spectrum, receiving, by the temporal compression element, second input radiation, the second input radiation being pulsed radiation, the second input radiation having a second spectrum different from the first spectrum, and temporally shortening, by the temporal compression element, a pulse of the first input radiation to produce first output radiation, temporally shortening, by the temporal compression element, the second radiation to produce second output radiation, and outputting, by the temporal compression element, the first output radiation and the second output radiation.

### BRIEF DESCRIPTION OF THE DRAWINGS

Embodiments will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 schematically illustrates a scatterometry apparatus;
- Figure 5 schematically illustrates a transmissive scatterometry apparatus;
- Figure 6 depicts a schematic representation of a metrology apparatus in which EUV and/or SXR radiation is used;
- Figure 7 depicts a simplified schematic drawing of an illumination source;
- Figure 8 depicts a schematic illustration of a system for receiving pump radiation and providing output radiation according to the present disclosure;
- Figure 9 depicts a schematic illustration of a system according to the present disclosure comprising a first spectral broadening element, a second spectral broadening element, a first temporal compression element, and a second temporal compression element;
- Figure 10 depicts a flow diagram of steps in a method of providing output radiation according to the present disclosure;
- Figure 11 depicts an example of a spectral broadening element configured to receive first input radiation and second input radiation according to the present disclosure;
- Figures 12 to 15 show the results of simulations demonstrating the spectral broadening of two beams having different wavelengths by a hollow-core photonic crystal fiber
- Figure 16 depicts a flow diagram of steps in a method of providing output radiation according to the present disclosure;
- Figure 17 depicts an example of a temporal compression element configured to receive first input radiation and second input radiation according to the present disclosure; and
- Figure 18 depicts a flow diagram of steps in a method of providing output radiation according to the present disclosure.

### DETAILED DESCRIPTION

In the present document, the terms "radiation" and "beam" are used to encompass all types of electromagnetic radiation and particle radiation, including ultraviolet radiation (e.g. with a wavelength of 365, 248, 193, 157 or 126 nm), EUV (extreme ultra-violet radiation, e.g. having a wavelength in the range of about 5-100 nm), X-ray radiation (including hard X-ray radiation and soft X-ray radiation), electron beam radiation and other particle radiation.

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

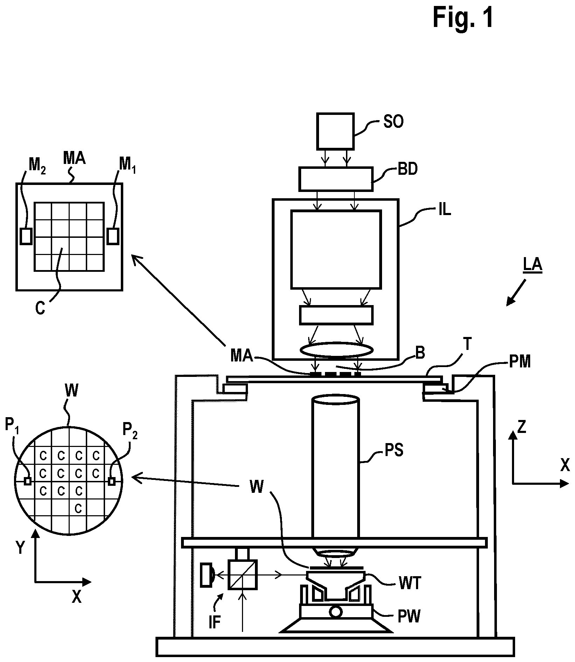

Figure 1 schematically depicts a lithographic apparatus LA. The lithographic apparatus LA includes an illumination system (also referred to as illuminator) IL configured to condition a radiation beam B (e.g., UV radiation, DUV radiation, EUV radiation or X-ray radiation), a mask support (e.g., a mask table) T constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, diffractive, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, diffractive, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference in its entirety.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support T, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT may be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

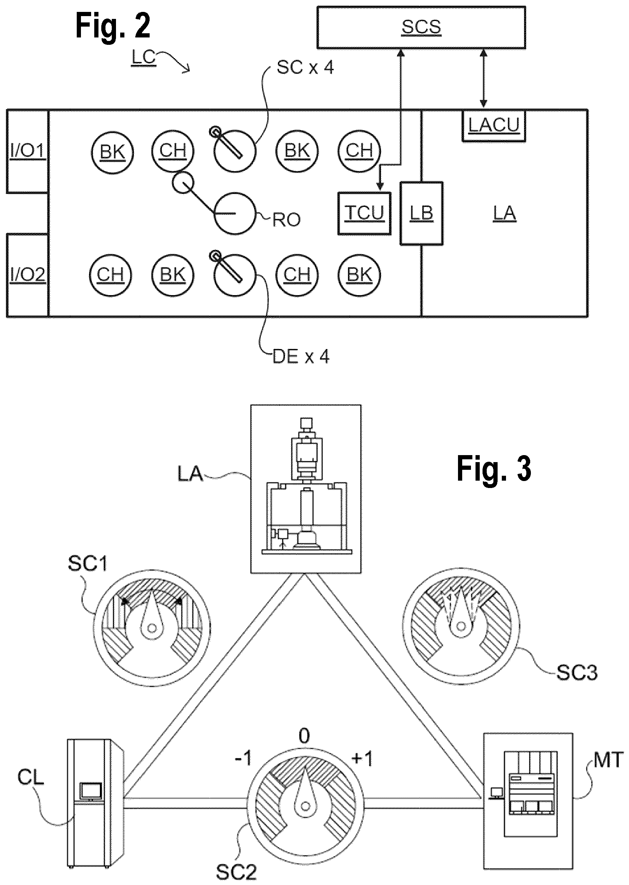

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, may be under the control of a track control unit TCU that in itself may be controlled by a supervisory control system SCS, which may also control the lithographic apparatus LA, e.g. via lithography control unit LACU.

In lithographic processes, it is desirable to make frequently measurements of the structures created, e.g., for process control and verification. Tools to make such measurement may be called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in or close to the pupil or a conjugate plane with the pupil of the objective of the scatterometer, measurements usually referred as pupil based measurements, or by having the sensor in or close to an image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from hard X-ray (HXR), soft X-ray (SXR), extreme ultraviolet (EUV), visible to near-infrared (IR) and IR wavelength range. In case that the radiation is hard X-ray or soft X-ray, the aforementioned scatterometers may optionally be a small-angle X-ray scattering metrology tool.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), shape of structures, etc. For this purpose, inspection tools and/or metrology tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected, transmitted or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered or transmitted radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (maybe overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for overlay error between the two layers containing periodic structures as target measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after other manufacturing process, etch process for example. The pitch and line-width of the structures in the gratings may strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resemble the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

The patterning process in a lithographic apparatus LA may be one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - maybe within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). The resolution enhancement techniques may be arranged to match the patterning possibilities of the lithographic apparatus LA. The computer system CL may also be used to detect where within the process window the lithographic apparatus LA is currently operating (e.g. using input from the metrology tool MET) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

Many different forms of metrology tools MT for measuring structures created using lithographic pattering apparatus can be provided. Metrology tools MT may use electromagnetic radiation to interrogate a structure. Properties of the radiation (e.g. wavelength, bandwidth, power) can affect different measurement characteristics of the tool, with shorter wavelengths generally allowing for increased resolution. Radiation wavelength has an effect on the resolution the metrology tool can achieve. Therefore, in order to be able to measure structures with features having small dimensions, metrology tools MT with short wavelength radiation sources are preferred.

Another way in which radiation wavelength can affect measurement characteristics is penetration depth, and the transparency/opacity of materials to be inspected at the radiation wavelength. Depending on the opacity and/or penetration depth, radiation can be used for measurements in transmission or reflection. The type of measurement can affect whether information is obtained about the surface and/or the bulk interior of a structure/substrate. Therefore, penetration depth and opacity are another element to be taken into account when selecting radiation wavelength for a metrology tool.

In order to achieve higher resolution for measurement of lithographically patterned structures, metrology tools MT with short wavelengths are preferred. This may include wavelengths shorter than visible wavelengths, for example in the UV, EUV, and X-ray portions of the electromagnetic spectrum. Hard X-ray methods such as Transmitted Small Angle X-ray Scattering (TSAXS) make use of the high resolution and high penetration depth of hard X-rays and may therefore operate in transmission. Soft X-rays and EUV, on the other hand, do not penetrate the target as far but may induce a rich optical response in the material to be probed. This may be due the optical properties of many semiconductor materials, and due to the structures being comparable in size to the probing wavelength. As a result, EUV and/or soft X-ray metrology tools MT may operate in reflection, for example by imaging, or by analyzing diffraction patterns from, a lithographically patterned structure.

For hard X-ray, soft X-ray and EUV radiations, applications in high volume manufacturing (HVM) applications may be limited due to a lack of available high-brilliance radiation sources at the required wavelengths. In the case of hard X-rays, commonly used sources in industrial applications include X-ray tubes. X-ray tubes, including advanced X-ray tubes for example based on liquid metal anodes or rotating anodes, may be relatively affordable and compact, but may lack brilliance required for HVM applications. High brilliance X-ray sources such as Synchrotron Light Sources (SLSs) and X-ray Free Electron Lasers (XFELs) currently exist, but their size (>100m) and high cost (multi-100-million euro), makes them prohibitively large and expensive for metrology applications. Similarly, there is a lack of availability of sufficiently bright EUV and soft X-ray radiation sources.

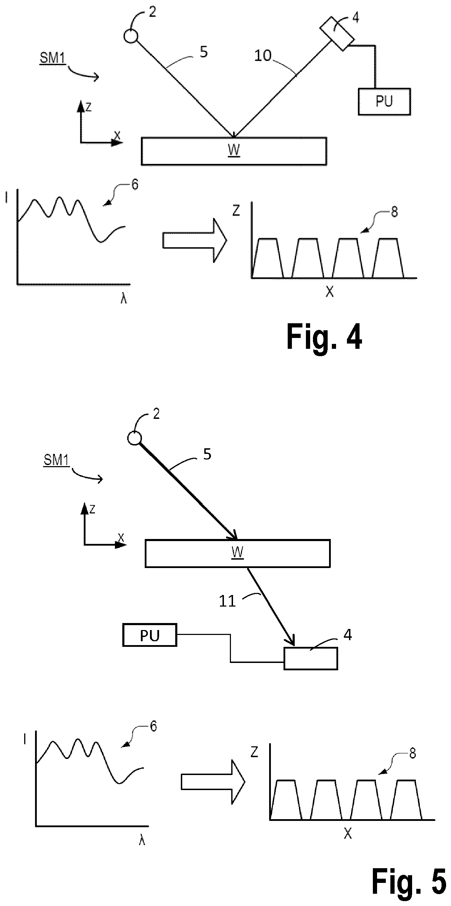

One example of a metrology apparatus, such as a scatterometer, is depicted in Figure 4. It may comprise a broadband (e.g. white light) radiation projector 2 which projects radiation 5 onto a substrate W. The reflected or scattered radiation 10 is passed to a spectrometer detector 4, which measures a spectrum 6 (i.e. a measurement of intensity I as a function of wavelength λ) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

A transmissive version of the example of a metrology apparatus, such as a scatterometer shown in Figure 4, is depicted in Figure 5. The transmitted radiation 11 is passed to a spectrometer detector 4, which measures a spectrum 6 as discussed for Figure 4. Such a scatterometer may be configured as a normal-incidence scatterometer or an oblique-incidence scatterometer. Optionally, the transmissive version using hard X-ray radiation with wavelength < 1nm, optionally <0.1nm, optionally <0.01nm.

As an alternative to optical metrology methods, it has also been considered to use hard X-ray, soft X-rays or EUV radiation, for example radiation with at least one of the wavelength ranges: <0.01nm, <0.1nm, <1nm, between 0.01nm and 100nm, between 0.01nm and 50nm, between 1nm and 50nm, between 1nm and 20nm, between 5nm and 20nm, and between 10nm and 20nm. One example of metrology tool functioning in one of the above presented wavelength ranges is transmissive small angle X-ray scattering (T-SAXS as in US 2007224518A which content is incorporated herein by reference in its entirety). Profile (CD) measurements using T-SAXS are discussed by Lemaillet et al in "Intercomparison between optical and X-ray scatterometry measurements of FinFET structures", Proc. of SPIE, 2013, 8681. It is noted that the use of laser produced plasma (LPP) x-ray source is described in U.S. Patent Publication No. 2019 /003988A1, and in U.S. Patent Publication No. 2019 /215940A1, which are incorporated herein by reference in the entirety. Reflectometry techniques using X-rays (GI-XRS) and extreme ultraviolet (EUV) radiation at grazing incidence may be used for measuring properties of films and stacks of layers on a substrate. Within the general field of reflectometry, goniometric and/or spectroscopic techniques may be applied. In goniometry, the variation of a reflected beam with different incidence angles may be measured. Spectroscopic reflectometry, on the other hand, measures the spectrum of wavelengths reflected at a given angle (using broadband radiation). For example, EUV reflectometry has been used for inspection of mask blanks, prior to manufacture of reticles (patterning devices) for use in EUV lithography.

It is possible that the range of application makes the use of wavelengths in e.g. the hard-X-rays, soft X-rays or EUV domain not sufficient. Published patent applications US 20130304424A1 and US2014019097A1 (Bakeman et al/KLA) describe hybrid metrology techniques in which measurements made using x-rays and optical measurements with wavelengths in the range 120 nm and 2000 nm are combined together to obtain a measurement of a parameter such as CD. A CD measurement is obtained by coupling an x-ray mathematical model and an optical mathematical model through one or more common. The contents of the cited US patent applications are incorporated herein by reference in their entirety.

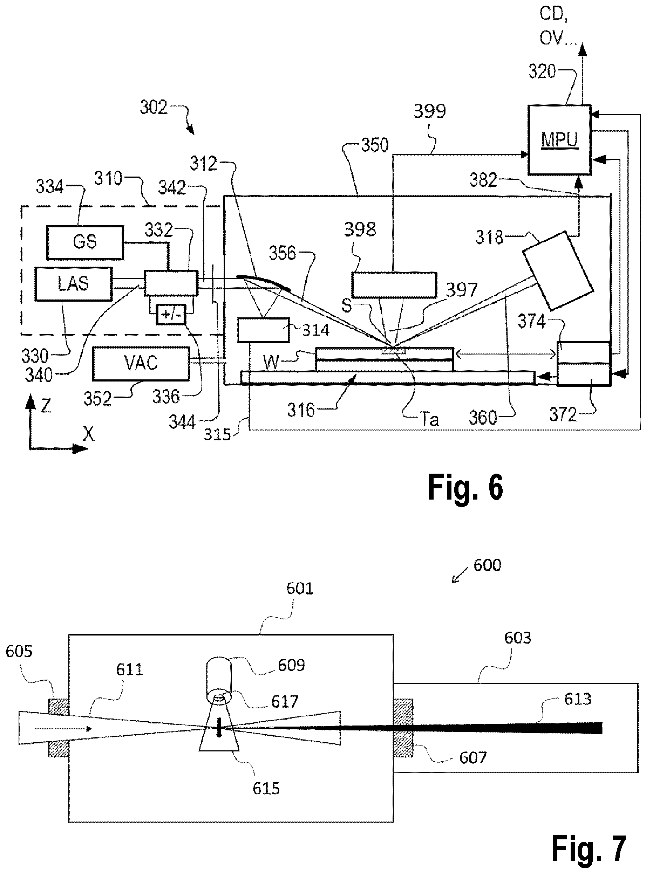

Figure 6 depicts a schematic representation of a metrology apparatus 302 in which the aforementioned radiation may be used to measure parameters of structures on a substrate. The metrology apparatus 302 presented in Figure 6 may be suitable for the hard X-ray, soft X-rays and/or EUV domain.

Figure 6 illustrates a schematic physical arrangement of a metrology apparatus 302 comprising a spectroscopic scatterometer using hard X-ray, Soft X-Ray and/or EUV radiation optionally in grazing incidence, purely by way of example. An alternative form of inspection apparatus might be provided in the form of an angle-resolved scatterometer, which may use radiation in normal or near-normal incidence similar to the conventional scatterometers operating at longer wavelengths, and which may also use radiation with direction being greater than 1° or 2° from a direction parallel to the substrate. An alternative form of inspection apparatus might be provided in the form of a transmissive scatterometer, to which the configuration in Figure 5 applies.

Inspection apparatus 302 comprises a radiation source or called illumination source 310, illumination system 312, substrate support 316, detection systems 318, 398 and metrology processing unit (MPU) 320.

An illumination source 310 in this example is for a generation of EUV, hard X-ray or soft X-ray radiation. The illumination source 310 may be based on high harmonic generation (HHG) techniques as shown in Figure 6, and it may also be other types of illumination sources, e.g. liquid metal jet source, inverse Compton scattering (ICS) source, plasma channel source, magnetic undulator source, free electron laser (FEL) source, compact storage ring source, electrical discharge produced plasma source, soft X-ray laser source, rotating anode source, solid anode source, particle accelerator source, microfocus source, or laser produced plasma source.

The HHG source, as well as other types of sources, may have a gas target and be a gas jet/nozzle source, a capillary/fiber source or a gas cell source. The HHG source, as well as other types of sources, may have a solid or liquid target. Although HHG source with gas target is described in the text below, it will be appreciated that the invention is not limited to HHG source with gas target and may be used in HHG source with solid or liquid target and other types of source with any target. The gas target, solid target and liquid target may be referred as generating/target medium.

For the example of HHG source, as shown in Figure 6, main components of the radiation source are a pump radiation source 330 operable to emit the pump radiation and a gas delivery system 332. Optionally the pump radiation source 330 is a laser, optionally the pump radiation source 330 is a pulsed high-power infrared or optical laser. The pump radiation source 330 may be, for example, a fiber-based laser with an optical amplifier, producing pulses of infrared radiation that may last for example less than 1 ns (1 nanosecond) per pulse, with a pulse repetition rate up to several megahertz, as required. The wavelength of the infrared radiation may be in the range 200nm to 10µm, for example in the region of 1 µm (1 micron). Optionally, the laser pulses are delivered as a first pump radiation 340 to the gas delivery system 332, wherein the gas a portion of the radiation is converted to higher frequencies than the first radiation into an emitted radiation 342. A gas supply 334 supplies a suitable gas to the gas delivery system 332, where it is optionally ionized by an electric source 336. The gas delivery system 332 may be a cut tube.

A gas provided by the gas delivery system 332 defines a gas target, which may be a gas flow or a static volume. The gas may be for example air, Neon (Ne), Helium (He), Nitrogen (N₂), Oxygen (Oz), Argon (Ar), Krypton (Kr), Xenon (Xe), Carbon dioxide and the combination of them. These may be selectable options within the same apparatus. The emitted radiation may contain multiple wavelengths. If the emitted radiation were monochromatic, then measurement calculations (for example reconstruction) may be simplified, but it is easier to produce radiation with several wavelengths. An emission divergence angle of the emitted radiation may be wavelength dependent. Different wavelengths will, for example, provide different levels of contrast when imaging structure of different materials. For inspection of metal structures or silicon structures, for example, different wavelengths may be selected to those used for imaging features of (carbon-based) resist, or for detecting contamination of such different materials. One or more filtering devices 344 may be provided. For example a filter such as a thin membrane of Aluminum (Al) or Zirconium (Zr) may serve to cut the fundamental IR radiation from passing further into the inspection apparatus. A grating (not shown) may be provided to select one or more specific wavelengths from among those generated. Optionally the illumination source comprises a space that is configured to be evacuated and the gas delivery system is configured to provide a gas target in the space. Optionally some or all of the beam path may be contained within a vacuum environment, bearing in mind that SXR and/or EUV radiation is absorbed when traveling in air. The various components of radiation source 310 and illumination optics 312 may be adjustable to implement different metrology 'recipes' within the same apparatus. For example different wavelengths and/or polarization may be made selectable.

Depending on the materials of the structure under inspection, different wavelengths may offer a desired level of penetration into lower layers. For resolving the smallest device features and defects among the smallest device features, then a short wavelength is likely to be preferred. For example, one or more wavelengths in the range 0.01-20 nm or optionally in the range 1-10 nm or optionally in the range 10-20 nm may be chosen. Wavelengths shorter than 5 nm may suffer from very low critical angle when reflecting off materials of interest in semiconductor manufacture. Therefore to choose a wavelength greater than 5 nm may provide stronger signals at higher angles of incidence. On the other hand, if the inspection task is for detecting the presence of a certain material, for example to detect contamination, then wavelengths up to 50 nm could be useful.

From the radiation source 310, the filtered beam 342 may enter an inspection chamber 350 where the substrate W including a structure of interest is held for inspection at a measurement position by substrate support 316. The structure of interest is labeled T. Optionally the atmosphere within inspection chamber 350 may be maintained near vacuum by vacuum pump 352, so that SXR and/or EUV radiation may pass with-out undue attenuation through the atmosphere. The Illumination system 312 has the function of focusing the radiation into a focused beam 356, and may comprise for example a two-dimensionally curved mirror, or a series of one-dimensionally curved mirrors, as described in published US patent application US2017/0184981A1 (which content is incorporated herein by reference in its entirety), mentioned above. The focusing is performed to achieve a round or elliptical spot S under 10 µm in diameter, when projected onto the structure of interest. Substrate support 316 comprises for example an X-Y translation stage and a rotation stage, by which any part of the substrate W may be brought to the focal point of beam to in a desired orientation. Thus the radiation spot S is formed on the structure of interest. Alternatively, or additionally, substrate support 316 comprises for example a tilting stage that may tilt the substrate W at a certain angle to control the angle of incidence of the focused beam on the structure of interest T.

Optionally, the illumination system 312 provides a reference beam of radiation to a reference detector 314 which may be configured to measure a spectrum and/or intensities of different wavelengths in the filtered beam 342. The reference detector 314 may be configured to generate a signal 315 that is provided to processor 320 and the filter may comprise information about the spectrum of the filtered beam 342 and/or the intensities of the different wavelengths in the filtered beam.

Reflected radiation 360 is captured by detector 318 and a spectrum is provided to processor 320 for use in calculating a property of the target structure T. The illumination system 312 and detection system 318 thus form an inspection apparatus. This inspection apparatus may comprise a hard X-ray, soft X-ray and/or EUV spectroscopic reflectometer of the kind described in US2016282282A1 which content is incorporated herein by reference in its entirety.

If the target Ta has a certain periodicity, the radiation of the focused beam 356 may be partially diffracted as well. The diffracted radiation 397 follows another path at well-defined angles with respect to the angle of incidence then the reflected radiation 360. In Figure 6, the drawn diffracted radiation 397 is drawn in a schematic manner and diffracted radiation 397 may follow many other paths than the drawn paths. The inspection apparatus 302 may also comprise further detection systems 398 that detect and/or image at least a portion of the diffracted radiation 397. In Figure 6 a single further detection system 398 is drawn, but embodiments of the inspection apparatus 302 may also comprise more than one further detection system 398 that are arranged at different position to detect and/or image diffracted radiation 397 at a plurality of diffraction directions. In other words, the (higher) diffraction orders of the focused radiation beam that impinges on the target Ta are detected and/or imaged by one or more further detection systems 398. The one or more detection systems 398 generates a signal 399 that is provided to the metrology processor 320. The signal 399 may include information of the diffracted light 397 and/or may include images obtained from the diffracted light 397.

To aid the alignment and focusing of the spot S with desired product structures, inspection apparatus 302 may also provide auxiliary optics using auxiliary radiation under control of metrology processor 320. Metrology processor 320 may also communicate with a position controller 372 which operates the translation stage, rotation and/or tilting stages. Processor 320 receives highly accurate feedback on the position and orientation of the substrate, via sensors. Sensors 374 may include interferometers, for example, which may give accuracy in the region of picometers. In the operation of the inspection apparatus 302, spectrum data 382 captured by detection system 318 is delivered to metrology processing unit 320.

As mentioned an alternative form of inspection apparatus uses hard X-ray, soft X-ray and/or EUV radiation optionally at normal incidence or near-normal incidence, for example to perform diffraction-based measurements of asymmetry. Another alternative form of inspection apparatus uses hard X-ray, soft X-ray and/or EUV radiation with direction being greater than 1° or 2° from a direction parallel to the substrate. Both types of inspection apparatus could be provided in a hybrid metrology system. Performance parameters to be measured may include overlay (OVL), critical dimension (CD), focus of the lithography apparatus while the lithography apparatus printed the target structure, coherent diffraction imaging (CDI) and at-resolution overlay (ARO) metrology. The hard X-ray, soft X-ray and/or EUV radiation may for example have wavelengths less than 100 nm, for example using radiation in the range 5-30 nm, of optionally in the range from 10 nm to 20 nm. The radiation may be narrowband or broadband in character. The radiation may have discrete peaks in a specific wavelength band or may have a more continuous character.

Like the optical scatterometer used in today's production facilities, the inspection apparatus 302 may be used to measure structures within the resist material treated within the litho cell (After Develop Inspection or ADI), and/or to measure structures after they have been formed in harder material (After Etch Inspection or AEI). For example, substrates may be inspected using the inspection apparatus 302 after they have been processed by a developing apparatus, etching apparatus, annealing apparatus and/or other apparatus.

Metrology tools MT, including but not limited to the scatterometers mentioned above, may use radiation from a radiation source to perform a measurement. The radiation used by a metrology tool MT may be electromagnetic radiation. The radiation may be optical radiation, for example radiation in the infrared, visible, and/or ultraviolet parts of the electromagnetic spectrum. Metrology tools MT may use radiation to measure or inspect properties and aspects of a substrate, for example a lithographically exposed pattern on a semiconductor substrate. The type and quality of the measurement may depend on several properties of the radiation used by the metrology tool MT. For example, the resolution of an electromagnetic measurement may depend on the wavelength of the radiation, with smaller wavelengths able to measure smaller features, e.g. due to the diffraction limit. In order to measure features with small dimensions, it may be preferable to use radiation with a short wavelength, for example EUV, hard X-ray (HXR) and/or Soft X-Ray (SXR) radiation, to perform measurements. In order to perform metrology at a particular wavelength or wavelength range, the metrology tool MT requires access to a source providing radiation at that/those wavelength(s). Different types of sources exist for providing different wavelengths of radiation. Depending on the wavelength(s) provided by a source, different types of radiation generation methods may be used. For extreme ultraviolet (EUV) radiation (e.g. 1 nm to 100 nm), and/or soft X-ray (SXR) radiation (e.g. 0.1 nm to 10 nm), a source may use HHG or any other types of sources mentioned above to obtain radiation at the desired wavelength(s).

Figure 7 shows a simplified schematic drawing of an embodiment 600 of an illumination source 310, which may be the illumination source for HHG. One or more of the features of the illumination source in the metrology tool described with respect to Figures 6 may also be present in the illumination source 600 as appropriate. The illumination source 600 comprises a chamber 601 and is configured to receive a pump radiation 611 with a propagation direction which is indicated by an arrow. The pump radiation 611 shown here is an example of the pump radiation 340 from the pump radiation source 330, as shown in Figure 6. The pump radiation 611 may be directed into the chamber 601 through the radiation input 605, which maybe a viewport, optionally made of fused silica or a comparable material. The pump radiation 611 may have a Gaussian or hollow, for example annular, transversal cross-sectional profile and may be incident, optionally focused, on a gas flow 615, which has a flow direction indicated by a second arrow, within the chamber 601. The gas flow 615 comprises a small volume called gas volume or gas target (for example several cubic mm) of a particular gas (for example, air, Neon (Ne), Helium (He), Nitrogen (N₂), Oxygen (O₂), Argon (Ar), Krypton (Kr), Xenon (Xe), Carbon dioxide and the combination of them.) in which the gas pressure is above a certain value. The gas flow 615 may be a steady flow. Other media, such as metallic plasmas (e.g. aluminium plasma) may also be used.

The gas delivery system of the illumination source 600 is configured to provide the gas flow 615. The illumination source 600 is configured to provide the pump radiation 611 in the gas flow 615 to drive the generation of emitted radiation 613. The region where at least a majority of the emitted radiation 613 is generated is called an interaction region. The interaction region may vary from several tens of micrometers (for tightly focused pump radiation) to several mm or cm (for moderately focused pump radiation) or even up to a few meters (for extremely loosely focused pump radiation). The gas delivery system is configured to provide the gas target for generating the emitted radiation at the interaction region of the gas target, and optionally the illumination source is configured to receive the pump radiation and to provide the pump radiation at the interactive region. Optionally, the gas flow 615 is provided by the gas delivery system into an evacuated or nearly evacuated space. The gas delivery system may comprise a gas nozzle 609, as shown in Figure 6, which comprises an opening 617 in an exit plane of the gas nozzle 609. The gas flow 615 is provided from the opening 617. The gas catcher is for confining the gas flow 615 in a certain volume by extracting residual gas flow and maintaining a vacuum or near vacuum atmosphere inside the chamber 601. Optionally the gas nozzle 609 may be made of thick-walled tube and/or high thermo-conductivity materials to avoid thermo deformation due to the high-power pump radiation 611.

The dimensions of the gas nozzle 609 may conceivably also be used in scaled-up or scaled-down versions ranging from micrometer-sized nozzles to meter-sized nozzles. This wide range of dimensioning comes from the fact that the setup may be scaled such that the intensity of the pump radiation at the gas flow ends up in the particular range which may be beneficial for the emitted radiation, which requires different dimensioning for different pump radiation energies, which may be a pulse laser and pulse energies can vary from tens of microjoules to joules. Optionally, the gas nozzle 609 has a thicker wall to reduce nozzle deformation caused by the thermal expansion effect, which may be detected by e.g. a camera. The gas nozzle with thicker wall may produce a stable gas volume with reduced variation. Optionally, the illumination source comprises a gas catcher which is close to the gas nozzle to maintain the pressure of the chamber 601.

Due to interaction of the pump radiation 611 with the gas atoms of the gas flow 615, the gas flow 615 will convert part of the pump radiation 611 into the emitted radiation 613, which may be an example of the emitted radiation 342 shown in Figure 6. The central axes of the emitted radiation 613 may be collinear with the central axes of the incident pump radiation 611. The emitted radiation 613 may have a wavelength in X-ray or EUV range, wherein the wavelength is in a range from 0.01 nm to 100 nm, optionally from 0.1 nm to 100 nm, optionally from 1 nm to 100 nm, optionally from 1 nm to 50 nm, or optionally from 10 nm to 20 nm.

In operation the emitted radiation 613 beam may pass through a radiation output 607 and may be subsequently manipulated and directed by an illumination system 603, which may be an example of the illumination system 312 in Figure 6, to a substrate to be inspected for metrology measurements. The emitted radiation 613 may be guided, optionally focused, to a structure on the substrate.

Because air (and in fact any gas) heavily absorbs SXR or EUV radiation, the volume between the gas flow 615 and the wafer to be inspected may be evacuated or nearly evacuated. Since the central axes of the emitted radiation 613 may be collinear with the central axes of the incident pump radiation 611, the pump radiation 611 may need to be blocked to prevent it passing through the radiation output 607 and entering the illumination system 603. This may be done by incorporating a filtering device 344 shown in Figure 6 into the radiation output 607, which is placed in the emitted beam path and that is opaque or nearly opaque to the pump radiation (e.g. opaque or nearly opaque to infrared or visible light) but at least partially transparent to the emitted radiation beam. The filter may be manufactured using zirconium or multiple materials combined in multiple layers. The filter may be a hollow, optionally an annular, block when the pump radiation 611 has a hollow, optionally an annular, transversal cross-sectional profile. Optionally, the filter is non-perpendicular and non-parallel to propagation direction of the emitted radiation beam to have efficient pump radiation filtering. Optionally, the filtering device 344 comprise a hollow block and a thin membrane filter such as an Aluminum (Al) or Zirconium (Zr) membrane filter. Optionally, the filtering device 344 may also comprise mirrors that efficiently reflect the emitted radiation but poorly reflect the pump radiation, or comprise a wire mesh that efficiently transmits the emitted radiation but poorly transmits the pump radiation.

Described herein are methods, apparatuses, and assemblies to obtain emitted radiation optionally at a high harmonic frequency of pump radiation. The radiation generated through the process, optionally the HHG which uses non-linear effects to generate radiation optionally at a harmonic frequency of provided pump radiation, may be provided as radiation in metrology tools MT for inspection and/or measurement of substrates. If the pump radiation comprises short pulses (i.e. few-cycle) then the generated radiation is not necessarily exactly at harmonics of the pump radiation frequency. The substrates may be lithographically patterned substrates. The radiation obtained through the process may also be provided in a lithographic apparatus LA, and/or a lithographic cell LC. The pump radiation may be pulsed radiation, which may provide high peak intensities for short bursts of time.

The pump radiation 611 may comprise radiation with one or more wavelengths higher than the one or more wavelengths of the emitted radiation. The pump radiation may comprise infrared radiation. The pump radiation may comprise radiation with wavelength(s) in the range of 500 nm to 1500 nm. The pump radiation may comprise radiation with wavelength(s) in the range of 800 nm to 1300 nm. The pump radiation may comprise radiation with wavelength(s) in the range of 900 nm to 1300 nm. The pump radiation may be pulsed radiation. Pulsed pump radiation may comprise pulses with a duration in the femtosecond range.

For some embodiments, the emitted radiation, optionally the high harmonic radiation, may comprise one or more harmonics of the pump radiation wavelength(s). The emitted radiation may comprise wavelengths in the extreme ultraviolet, soft X-Ray, and/or hard X-Ray part of the electromagnetic spectrum. The emitted radiation 613 may comprise wavelengths in one or more of the ranges of less than 1nm, less than 0.1nm, less than 0.01nm, 0.01 nm to 100 nm, 0.1 nm to 100 nm, 0.1 nm to 50 nm, 1 nm to 50 nm and 10 nm to 20 nm.

Radiation, such as high harmonic radiation described above, may be provided as source radiation in a metrology tool MT. The metrology tool MT may use the source radiation to perform measurements on a substrate exposed by a lithographic apparatus. The measurements may be for determining one or more parameters of a structure on the substrate. Using radiation at shorter wavelengths, for example at EUV, SXR and/or HXR wavelengths as comprised in the wavelength ranges described above, may allow for smaller features of a structure to be resolved by the metrology tool, compared to using longer wavelengths (e.g. visible radiation, infrared radiation). Radiation with shorter wavelengths, such as EUVSXR and/or HXR radiation, may also penetrate deeper into a material such as a patterned substrate, meaning that metrology of deeper layers on the substrate is possible. These deeper layers may not be accessible by radiation with longer wavelengths.

In a metrology tool MT, source radiation may be emitted from a radiation source and directed onto a target structure (or other structure) on a substrate. The source radiation may comprise EUVSXR and/or HXR radiation. The target structure may reflect, transmit and/or diffract the source radiation incident on the target structure. The metrology tool MT may comprise one or more sensors for detecting diffracted radiation. For example, a metrology tool MT may comprise detectors for detecting the positive (+1st) and negative (-1st) first diffraction orders. The metrology tool MT may also measure the specular reflected or transmitted radiation (0th order diffracted radiation). Further sensors for metrology may be present in the metrology tool MT, for example to measure further diffraction orders (e.g. higher diffraction orders).

In an example lithographic metrology application, the HHG generated radiation may be focused onto a target on the substrate using an optical column, which may be referred to as an illuminator, which transfers the radiation from the HHG source to the target. The HHG radiation may then be reflected from the target, detected and processed, for example to measure and/or infer properties of the target.

Gas target HHG configurations may be broadly divided into three separate categories: gas jets, gas cell and gas capillaries. Figure 7 depicts an example gas jet configuration in which as gas volume is introduced into a drive radiation laser beam. In a gas jet configuration, interaction of the drive radiation with solid parts is kept to a minimum. The gas volume may for example comprise a gas stream perpendicular to the drive radiation beam, with the gas volume enclosed inside a gas cell. In a gas capillary setup, the dimensions of the capillary structure holding the gas are small in a lateral direction such that it significantly influences the propagation of the drive radiation laser beam. The capillary structure may for example be a hollow-core fibre, wherein the hollow core is configured to hold the gas.

A gas jet HHG configuration may offer a relative freedom to shape a spatial profile of the drive radiation beam in the far field, as it is not confined by the restrictions imposed by the gas capillary structure. Gas jet configurations may also have less stringent alignment tolerances. On the other hand, a gas capillary may provide an increased interaction zone of the drive radiation and the gaseous medium, which may optimize the HHG process.

In order to use the HHG radiation, for example in a metrology application, it is separated from the drive radiation downstream of the gas target. The separation of the HHG and drive radiation may be different for the gas jet and gas capillary configurations. In both cases, the drive radiation rejection scheme can comprise a metal transmissive filter for filtering out any remaining drive radiation from the short wavelength radiation. However, before such a filter can be used, the intensity of the drive radiation should be reduced significantly from its intensity at the gas target, in order to avoid damage to the filter. The methods that can be used for this intensity reduction differ for the gas jet and capillary configurations. For a gas jet HHG, due to the relative freedom of the shape and spatial profile (which may also be referred to as a spatial distribution, and/or spatial frequencies) of the drive radiation beam focused onto the gas target, this can be engineered such that in the far field it has a low intensity along the directions where the short wavelength radiation propagates. This spatial separation in the far field means an aperture may be used to block the drive radiation and lower its intensity

In contrast, in a gas capillary structure, the spatial profile of the beam as it passes through the gaseous medium may be largely dictated by the capillary. The spatial profile of the drive radiation may be determined by the shape and material of the capillary structure. For example, in the case of a hollow-core fiber being used as a capillary structure, the shape and materials of the fiber structure determine which modes of drive radiation are supported for propagation through the fiber. For most standard fibers, the supported propagating modes lead to a spatial profile where the high intensity of the drive radiation overlaps with the high intensity of the HHG radiation. For example, the drive radiation intensity may be centered, in a Gaussian or close-to-Gaussian profile in the far field.

Although specific reference is made to HHG, it will be appreciated that the invention, where the context allows, may be practiced with all radiation sources. In one embodiment, the radiation source is a laser produced plasma (LPP) source as mentioned above, for hard X-ray, soft X-ray, EUV, DUV as well as visible illumination generation. In one embodiment, the radiation source is one of liquid metal jet source, inverse Compton scattering (ICS) source, plasma channel source, magnetic undulator source, free electron laser (FEL) source, compact storage ring source, electrical discharge produced plasma source, rotating anode source, solid anode source, particle accelerator source, and microfocus source.

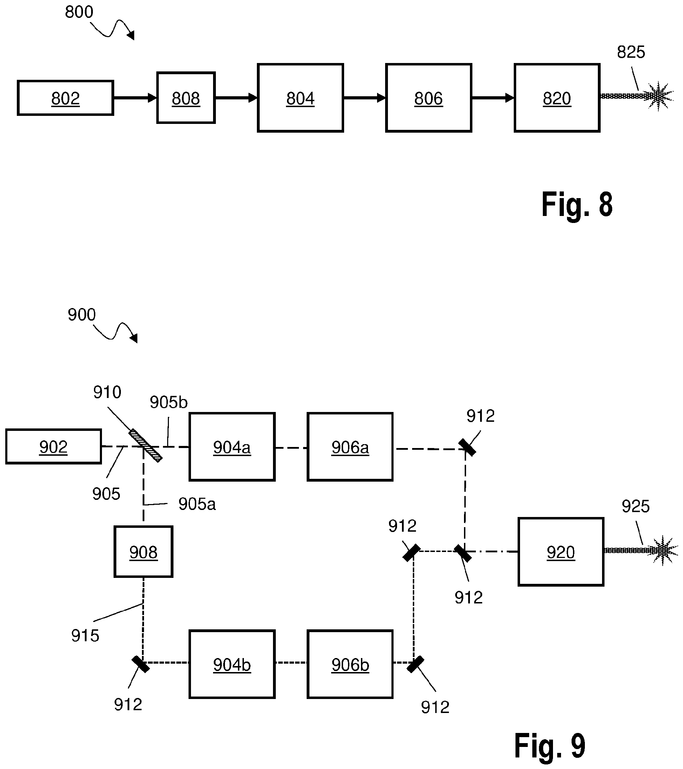

Figure 8 schematically illustrates an example of a system 800 according to the present disclosure. In some examples, the system 800 may form part of a metrology apparatus 302 or metrology tool MT as described herein and illustrated above and in Figures 3, 4, 5, and 6. In particular, the system 800 may be used to generate the radiation 5 that is projected by the radiation projector 2 onto the substrate W as depicted in Figures 4 and 5. For example, the system 800 may form at least part of the radiation source 310 of the metrology apparatus 302, illustrated in Figure 6.

It will be understood that the schematic illustration of Figure 8 merely shows broadly the components of the system 800, and possible relationships between said components. That is, Figure 8 may not necessarily be representative, for example, of any beam paths taken by radiation through the system 800. In general, the components of the system 800 may be arranged in any suitable order.

A system 800 according to the present disclosure receives pump radiation, optionally pulsed pump radiation. The (pulsed) pump radiation may be provided by a radiation source 802 such as a laser. An example of a suitable radiation source 802 is a Ti: sapphire laser. In some examples, the pulsed pump radiation may have a wavelength in the range 400 nm to 3000 nm. Examples of suitable wavelengths for the pulsed pump radiation include 800 nm, 1000 nm, 1030 nm, 1.5 µm, and 2 µm. In some examples, a peak intensity of the pump radiation pulses is between about 1 GW/cm² and about 100 GW/cm². The peak intensity of the pulses can be modified by changing the pulse length, beam diameter, and/or pulse energy of the radiation beam. In examples, the pump radiation pulses may have pulse energies in a range from about 10 µJ to about 1 mJ, based on a pulse length of 100 fs pulse length and a 5 mm beam diameter (assuming a Gaussian beam profile, where the beam diameter is defined by a 1/*e*² beam waist). In some examples, the pump radiation pulses may have a pulse length ranging from about 100 fs to several picoseconds.

The system 800 comprises a first optical component, optionally a first nonlinear optical component 808. The first nonlinear optical component 808 may comprise one or more nonlinear optical elements, for example a nonlinear crystal such as a second harmonic generation (SHG) crystal, such as beta barium borate (BBO). The first nonlinear optical component 808 is configured to convert a first portion of the pump radiation into converted radiation via a first nonlinear process such as harmonic generation (e.g. SHG). For example, when the first nonlinear process is SHG, the converted radiation is a wavelength equal to half the wavelength of the pump radiation. In some examples, the first nonlinear process comprises or further comprises third harmonic generation (THG) and/or fourth harmonic generation (FHG). In some examples, the entire output of the radiation source 802 (i.e. all of the pump radiation) may be directed towards the first nonlinear optical component 808, such that an output of the first nonlinear optical component 808 comprises the converted radiation (e.g. the second harmonic) generated from the first portion of the pump radiation, and a second portion of the pump radiation (e.g. the fundamental) that has not been converted (e.g. due to a conversion efficiency of less than 100% of the first nonlinear optical process). In some examples, the pump radiation may be separated into a first portion and a second portion at some point in the system 800 between the radiation source 802 and the first nonlinear optical component 808, for example using a beam splitter. In this case, the first portion of the pump radiation may be directed towards the first nonlinear optical component 808, while the second portion may bypass the first nonlinear optical component 808. Separating the first and second portions of the pump radiation may facilitate easier independent manipulation of the individual beams (including the converted radiation).

The system 800 further comprises a spectral broadening stage 804 configured to broaden a radiation spectrum of the converted radiation, and to broaden a radiation spectrum of the second portion of the pump radiation. In some examples, the spectral broadening stage 804 may comprise a single spectral broadening element, described in more detail below, that is configured to receive both the converted radiation and the second portion of the pump radiation. In some examples, the spectral broadening stage 804 may comprise separate spectral broadening elements configured to receive the second portion of the pump radiation, and the converted radiation, respectively, as described in more detail below.

In some examples, a spectral broadening element as described herein may comprise, e.g., an optical fiber such as a hollow core optical fiber or capillary structure, as described herein and in EP3136143A1, the content of which is hereby incorporated by reference, and/or a multipass cell.

The system 800 further comprises a temporal compression stage 806 configured to temporally shorten a pulse of the converted radiation, and to temporally shorten a pulse of the second portion of the pump radiation. In some examples, the temporal compression stage 806 may comprise a single temporal compression element, described in more detail below, that is configured to receive both the converted radiation and the second portion of the pump radiation. In some examples, the temporal compression stage 806 may comprise separate temporal compression elements configured to receive the second portion of the pump radiation, and the converted radiation, respectively, as described in more detail below with respect to Figure 9.

In some examples, a temporal compression element as described herein may comprise, e.g., one or more chirped mirrors arranged to shorten a pulse length of the pump and/or the converted radiation.

Following spectral broadening and temporal compression, the converted radiation and/or the second portion of the pump radiation may have a spectral full width at half maximum (FWHM) of 10 nm or more, 20 nm or more, 30 nm or more, or 40 nm or more, and a pulse duration of less than 40 fs, or less than 35 fs, less than 30 fs, less than 25 fs, less than 20 fs, less than 15 fs, less than 10 fs, or less than 5 fs.

It will be understood that, in general, the bandwidth of the converted radiation may be narrower than that of the (unconverted) pump radiation due to the shorter wavelength of the converted radiation. In an example, the pump radiation (and therefore the second portion of the pump radiation) may have a wavelength of 1030 nm, a spectral FWHM of around 40 nm, and a pulse duration of around 40 fs. In this example, the converted radiation (which may be frequency doubled radiation following a SHG process) may have a wavelength of 515 nm, and a spectral FWHM of around 10 nm for a pulse duration of around 40 fs.

In some examples, the system 800 may be configured so that the converted radiation and the second portion of the pump radiation have different spectral widths and/or pulse durations following spectral broadening and/or temporal compression.

The system 800 additionally comprises a second nonlinear optical component 820. The second nonlinear optical component 820 receives both the converted radiation and the second portion of the pump radiation, following spectral broadening and temporal compression, and generates output radiation 825 via a second nonlinear process. The second nonlinear process may comprise high harmonic generation (HHG). For example, the second nonlinear optical component 820 may comprise a gas target, a solid target, and/or a liquid target. For example, the second nonlinear optical component 820 may comprise a gas jet/nozzle source, and may be similar to the illumination source 310, 600 illustrated in Figures 6 and 7 and described herein.

The output radiation 825 may include EUV, soft X-ray, and/or hard X-ray radiation. For example, the output radiation 825 may include radiation having a wavelength in the range 1-100 nm. In some examples, the output radiation 825 may include radiation having a wavelength in the range 1-20 nm. It will be understood that the output radiation 825 does not necessarily include only wavelengths within the ranges described herein, and may comprise broadband radiation including wavelengths outside of these ranges.

The output radiation 825 may be provided to a metrology apparatus or metrology tool 302, MT (e.g. a scatterometer) as described herein. For example, the system 800 may form at least part of a radiation source to provide radiation for use in a metrology apparatus.

Figure 9 illustrates a particular example of a a system 900 according to the present disclosure in which the spectral broadening stage comprises first and second spectral broadening elements, and in which the temporal compression stage comprises first and second temporal compression elements.

As illustrated in Figure 9, the system 900 receives pulsed pump radiation 905. As described herein, the pulsed pump radiation 905 may be provided by a radiation source 902 such as a laser (e.g. a Ti:sapphire laser).

The system 900 comprises a first nonlinear optical component 908 (e.g. a SHG crystal). A first portion of the pump radiation 905a is incident on the first nonlinear optical component 908, and the first nonlinear optical component 908 converts the first portion of the pump radiation 905a into converted radiation 915 via a first nonlinear process such as SHG. For example, when the first nonlinear process is SHG, the converted radiation 915 has a wavelength equal to half the wavelength of the pump radiation 905. In some examples, as described herein, the first nonlinear process comprises THG and/or FHG.

The system 900 further comprises a first spectral broadening element 904a configured to receive, and spectrally broaden, a second portion of the pump radiation 905b, and a first temporal compression element 906a configured to temporally shorten a pulse of the second portion of the pump radiation 905b.

The system 900 may comprise a suitable optical element such as a beam splitter 910 to produce the first 905a and second 905b portions of the pump radiation 905. The system 900 may also comprise one or more optical elements 912 (e.g. mirrors) to guide the various radiation beams towards each component of the system 900.

The system 900 also comprises a second spectral broadening element 904b configured to receive, and spectrally broaden, the converted radiation 915, and a second temporal compression element 906b configured to temporally shorten a pulse of the converted radiation 915.

It will be understood that the first 904a and the second 904b spectral broadening elements illustrated in Figure 9 may correspond to the spectral broadening stage 804 illustrated in Figure 8. It will be further understood that the first 906a and the second 906b temporal compression elements illustrated in Figure 9 may correspond to the temporal compression stage 906 illustrated in Figure 8.

As described herein, the first 904a and/or second 904b spectral broadening element(s) may comprise, e.g., an optical fiber such as a hollow core optical fiber or capillary structure, and/or a multipass cell.

As described herein, the first 906a and/or second 906b temporal compression element(s) may comprise, e.g., one or more chirped mirrors arranged to shorten a pulse length of the pump and/or the converted radiation.

The system 900 comprises a second nonlinear optical component 920. As described above in relation to the second nonlinear optical component 820 illustrated in Figure 8, the second nonlinear optical component 920 receives both the converted radiation 915 and the second portion of the pump radiation 905b, following spectral broadening and temporal compression, and generates output radiation 925 via a second nonlinear process. The second nonlinear process may comprise high harmonic generation (HHG). For example, the second nonlinear optical component 920 may comprise a gas target, a solid target, and/or a liquid target. For example, the second nonlinear optical component 920 may comprise a gas jet/nozzle source, and may be similar to the illumination source 310, 600 illustrated in Figures 6 and 7 and described herein.

As described herein, the output radiation 925 may include EUV, soft X-ray, and/or hard X-ray radiation. For example, the output radiation 925 may include radiation having a wavelength in the range 1-100 nm. In some examples, the output radiation 925 may include radiation having a wavelength in the range 1-20 nm. It will be understood that the output radiation 925 does not necessarily include only wavelengths within the ranges described herein, and may comprise broadband radiation including wavelengths outside of these ranges.

The output radiation 925 may be provided to a metrology apparatus or metrology tool 302, MT (e.g. a scatterometer) as described herein. For example, the system 900 may form at least part of a radiation source to provide radiation for use in a metrology apparatus.

As described herein, and in more detail below, either or both of the spectral broadening stage 804 and the temporal compression stage 806 may comprise a single element configured to receive both the converted radiation and the second portion of the pump radiation. It will be appreciated that a system 800 according to the present disclosure may comprise, for example, a spectral broadening stage 804 comprising a first spectral broadening element configured to receive the second portion of the pump radiation, and a second spectral broadening element configured to receive the converted radiation (such as illustrated in Figure 9), and a temporal compression stage comprising a single temporal compression element configured to receive both the converted radiation and the second portion of the pump radiation. In another example, a system 800 may comprise a spectral broadening stage 804 comprising a single spectral broadening element configured to receive both the converted radiation and the second portion of the pump radiation, and a temporal compression stage 806 comprising a first temporal compression element configured to receive the second portion of the pump radiation, and a second temporal compression element configured to receive the converted radiation.

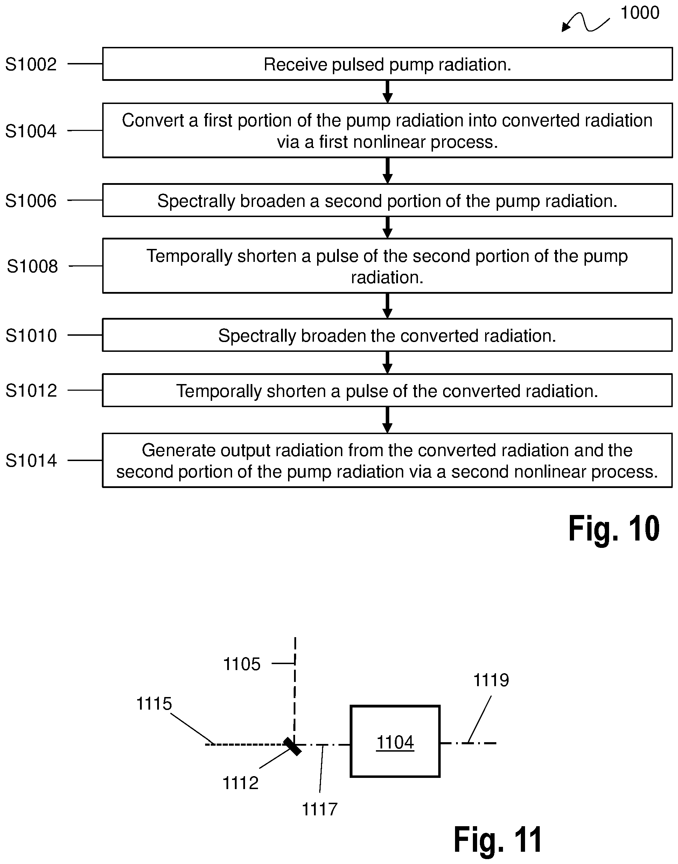

Figure 10 depicts a flow diagram of steps of a method 1000 of providing output radiation according to the present disclosure. In some examples, one or more steps of the method 1000 may be carried out using the system 800, 900 and/or an apparatus or tool 302, MT described herein.

At S1002, the method 1000 comprises receiving pulsed pump radiation. As described herein, the pulsed pump radiation may be provided by a laser (e.g. a Ti:sapphire laser) in some examples.

At S1004, the method 900 comprises converting a first portion of the pump radiation into converted radiation via a first nonlinear process. As described herein, the first nonlinear process may comprise harmonic generation such as SHG, THG, and/or FHG in some examples.

At S1006, the method 1000 comprises spectrally broadening a second portion of the pump radiation.

At S1008, the method 1000 comprises temporally shortening a pulse of the second portion of the pump radiation.

At S1010, the method 1000 comprises spectrally broadening the converted radiation.

At S1012, the method 1000 comprises temporally shortening a pulse of the converted radiation.

As described herein, in some examples the converted radiation and the second portion of the pump radiation may be spectrally broadened via a single spectral broadening element configured to receive both the converted radiation and the second portion of the pump radiation. In some examples, the second portion of the pump radiation may be spectrally broadened via a first spectral broadening element, the first spectral broadening element being configured to receive the second portion of the pump radiation. In some examples, the converted radiation may be spectrally broadened via a second spectral broadening element, the second spectral broadening element being configured to receive the converted radiation.

As described herein, in some examples the converted radiation and the second portion of the pump radiation may be temporally shortened via a single temporal compression element configured to receive both the converted radiation and the second portion of the pump radiation. In some examples, the second portion of the pump radiation may be temporally shortened via a first temporal compression element, the first temporal compression element being configured to receive the second portion of the pump radiation. In some examples, the converted radiation may be temporally shortened via a second temporal compression element, the second temporal compression element being configured to receive the converted radiation.

At S1014, the method 1000 comprises generating output radiation from the converted radiation and the second portion of the pump radiation via a second nonlinear process. As described herein, the second nonlinear process may comprise HHG.

As described herein, when the first nonlinear process takes place before the spectral broadening and/or temporal shortening of the converted radiation, a higher conversion efficiency can be achieved in comparison to known systems. The resulting higher power of the converted radiation leads ultimately to an improved conversion efficiency of the second nonlinear process, thereby increasing the power of the output radiation for metrology applications.

An example of a single spectral broadening element (also referred to herein as a system) configured to receive both the converted radiation and the second portion of the pump radiation will now be described.

Figure 11 illustrates an example implementation of a spectral broadening element 1104 configured to receive first input radiation 1105 and second input radiation 1115. In the example illustrated in Figure 11, the first input radiation 1105 may corresponds to a second portion of the pump radiation, and the second input radiation 1115 may correspond to converted radiation, produced in a similar way to that shown in Figure 9. However, it will be understood that, in general, the first input radiation 1105 and the second input radiation 1115 may be any two radiation beams having different spectra. In some examples, the second input radiation 1115 may be a second harmonic of the first input radiation 1105. In some examples, the first input radiation 1105 and the second input radiation 1115 may be produced by different radiation sources (e.g. separate lasers having different emission wavelengths).

As shown in Figure 11, the first input radiation 1105 and the second input radiation 1115 may be provided independently, for example to enable independent manipulation and tuning of e.g. the numerical aperture and energy of the beams. The two radiation beams may then be combined into a single beam 1117 (e.g. the two beams may be directed into the spectral broadening element 1104 substantially coaxially) using a suitable optical element 1112.

As shown in Figure 11, the spectral broadening element 1104 receives both the first input radiation 1105 and the second input radiation 1115 (e.g. as the single beam 1117). The first input radiation 1105 has a first spectrum, and the second input radiation 1115 has a second spectrum, different from the first spectrum. The spectral broadening element 1104 is able to broaden the first spectrum to produce first output radiation having the broadened first spectrum, and to broaden the second spectrum to produce second output radiation having the broadened second spectrum. As shown in Figure 11, the first output radiation and the second output radiation may be provided as a single beam 1119 output by the spectral broadening element 1104.

In an example, the spectral broadening element 1104 configured to receive the first input radiation 1105 and the second input radiation 1115 may comprise a multipass cell. A multipass cell employs a nonlinear interaction of a freely propagating pulse in a cavity, e.g. filled with a noble gas. Spectral broadening in a multipass cell is based on slow accumulation of B-integral along the propagation of pulses in a cavity, wherein the cavity may be at least partly defined by one or more mirrors (e.g. two or more mirrors). The one or more mirrors may be spherical mirrors. According to the present disclosure, the one or more mirrors of the multipass cell are substantially reflective to radiation having both the first spectrum (the first input radiation) and the second spectrum (the second input radiation), so that the multipass cell is capable of broadening radiation having both the first spectrum and the second spectrum. For example, the one or more mirrors may be coated with a suitable optical coating to be substantially reflective to radiation having both the first spectrum and the second spectrum. In the case in which the second input radiation has a wavelength of half that of the first input radiation (e.g. wherein the second input radiation is generated from the first input radiation by SHG), the optical coating is substantially reflective to both of these wavelengths. In an example, the one or more mirrors are substantially reflective to radiation having the wavelengths 1030 nm and 515 nm. An example of a suitable mirror to achieve reflectivity at both of these wavelengths is a coated UV fused silica mirror. The person skilled in the art will be aware of suitable coating materials. A suitable mirror (e.g. a spherical mirror) may be coated by ion beam sputtering, or another coating technique known in the art.

As described above, in some examples, the numerical apertures and energies of the two beams can be independently adjusted before the beams are received by the spectral broadening element 1104. For example, the pulse length may be varied by placing a transparent material in the beam path. When the spectral broadening element 1104 comprises a gas-filled multipass cell, starting from a situation wherein a target spectral bandwidth is achieved for one wavelength (e.g. the first input radiation), the other beam (e.g. the second input radiation) can be adjusted in such a way that the required amount of B-integral is achieved without changing the cavity parameters and the gas pressure. In practice, this may comprise adjusting the numerical aperture of the second radiation beam for a certain pulse energy, such that the achieved peak intensity is enough to induce the desired amount of B-integral over the available beam path in the cavity.

In another example, the spectral broadening element 1104 configured to receive the first input radiation 1105 and the second input radiation 1115 may comprise a hollow core optical fiber (e.g. a gas filled hollow core optical fiber), as described herein. In order to couple, or direct, both the first input radiation and the second input radiation (having different spectra) into the fiber, a lens and/or a focusing mirror may be employed. Such a lens may therefore be substantially transmissive to radiation having the first spectrum and to radiation having the second spectrum. For example, the lens may be an uncoated lens. In the case of a focusing mirror, the focusing mirror may be substantially reflective to radiation having the first spectrum and to radiation having the second spectrum (e.g. the focusing mirror may be suitably coated to be substantially reflective to radiation having both spectra).

In the case of hollow-core fibers, the numerical aperture of the beams is set by the core size of the fiber, and is preferably matched for optimal in-coupling (i.e. to the fiber). The energy of the two pulses can be set independently, and may depends on the specific requirements of a subsequent process such as the second nonlinear process (e.g. HHG). The fiber length and gas pressure are free parameters that can be optimized according to the requirements for spectral broadening at the two wavelengths.

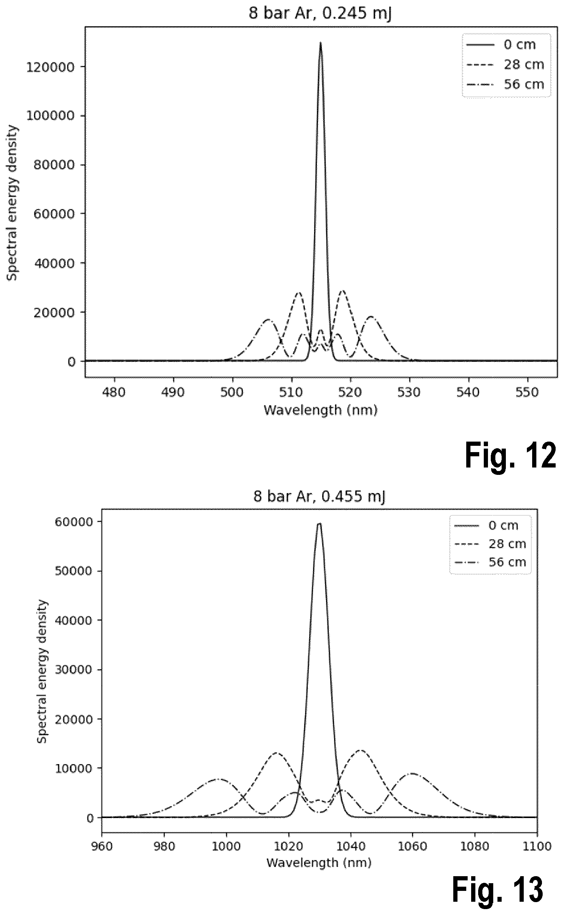

Figures 12 to 15 illustrate the results of simulations demonstrating the spectral broadening of two beams having different wavelengths (515 nm and 1030 nm, respectively) by a hollow-core photonic crystal fiber as described herein. The simulations performed using the open source code Luna (https://github.com/LupoLab/Luna.jl). In the following, an argon-filled hollow-core photonic crystal fiber having a length of 56 cm and a core diameter of 310 µm was assumed. The gas pressure was scanned to find a working regime that gives sufficient spectral broadening to support two pulse durations: ~35 fs and --15 fs. The spectral bandwidths required to support these pulse durations at (central) wavelengths of 515 nm and 1030 nm are shown in Table 1.

**Table 1: Spectral bandwidths required to support different pulse durations at central wavelengths of 515 nm and 1030 nm.**

| Central wavelength | Bandwidth required to support ∼35 fs pulse duration | Bandwidth required to support ∼ 15 fs pulse duration |
|---|---|---|
| 515 nm | ∼8 nm | ∼20 nm |
| 1030 nm | ∼32 nm | ∼70 nm |

The simulations were performed assuming realistic laser parameters: a 1030 nm beam having a pulse energy of 700 µJ and a pulse duration of 220 fs. In the simulations, it was assumed that the 515 nm beam was generated from the 1030 nm beam by SHG. Cases with two different SHG efficiencies were modelled: 35%, and 50%. Assuming no losses in the system, these two cases lead to an energy ratio between the fundamental beam and the second harmonic beam of 455 µJ / 245 µJ (35% efficient case), and 350 µJ / 350 µJ (50% efficient case), respectively.

Figures 12 and 13 show the results of the simulation performed as described above for a SHG efficiency of 35%. The figures show the spectral energy density of each beam at various points along the length of the fiber. As can be seen from Figure 12, the bandwidth of the 515 nm beam (second harmonic) is -20 nm close to the fiber output (i.e. at 56 cm of propagation), while Figure 13 shows that the bandwidth of the 1030 nm beam (fundamental) is -80 nm close to the fiber output. A resulting pulse duration of < 15 fs can therefore be expected (see Table 1). If the fiber length is approximately halved (equivalent to the spectra at 28 cm in Figures 12 and 13), the bandwidth of the 515 nm beam is --10 nm (corresponding to a pulse duration of close to 35 fs), and the bandwidth of the 1030 nm beam is -40 nm (corresponding to a pulse duration of close to 35 fs). It will be understood that a result equivalent to halving the fiber length can also be obtained by halving the gas pressure in the fiber.

It will be further understood that any mismatch in the pulse durations can be compensated for by stretching one of the pulses (e.g. adding dispersion) or by reducing the pulse's bandwidth by means of spectral filtering.

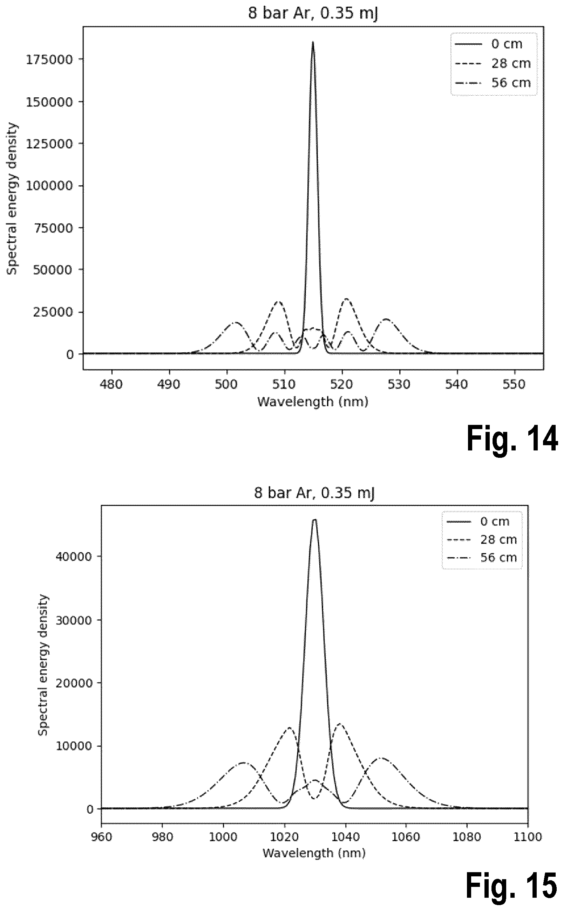

Figures 14 and 15 show the results of the simulation performed as described above for a SHG efficiency of 50%. Figure 14 shows a bandwidth of the 515 nm beam of -30 nm close to the output of the fiber, and Figure 15 shows a bandwidth of the 1030 nm beam of -60 nm close to the output of the fiber. A resulting pulse duration of ~ 15 fs can therefore be expected (see Table 1). At roughly half of the fiber length, the bandwidth of the 515 nm beam is -20 nm (corresponding to a pulse duration of close to 35 fs) and the bandwidth of the 1030 nm beam is ~30 nm (corresponding to a pulse duration of close to 35 fs).

As described herein, suitably coated optics having high reflectivity across both wavelengths of interest may be employed to transport both beams to and from the fiber.

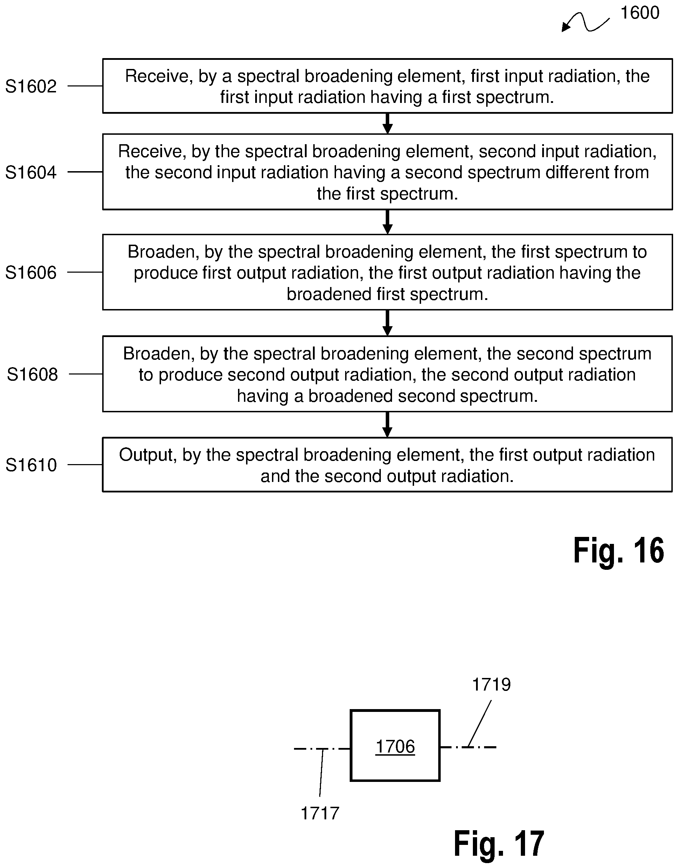

Figure 16 depicts a flow diagram of steps in another method 1600 of providing output radiation according to the present disclosure. In some examples, the method 1600 may be carried out using the spectral broadening element 1104 illustrated in Figure 11 and described herein. For example, the method 1600 may be carried out using a gas-filled hollow core photonic crystal fiber, and/or a multipass cell.

At S1602, the method 1600 comprises receiving, by a spectral broadening element, first input radiation, the first input radiation having a first spectrum.

At S1604, the method 1600 comprises receiving, by the spectral broadening element, second input radiation having a second spectrum different from the first spectrum.

In some examples, the second input radiation may be generated from the first input radiation by a nonlinear process such as SHG. The first input radiation and/or the second input radiation may be pulsed radiation.

At S1606, the method 1600 comprises broadening, by the spectral broadening element, the first spectrum to produce first output radiation, the first output radiation having the broadened first spectrum. That is, the first output radiation corresponds to the first input radiation following broadening by the spectral broadening element.

At S1608, the method 1600 comprises broadening, by the spectra broadening element, the second spectrum to produce second output radiation, the second output radiation having the broadened second spectrum. That is, the second output radiation corresponds to the second input radiation following broadening by the spectral broadening element.

At S1610, the method 1600 comprises outputting, by the spectral broadening element, the first output radiation and the second output radiation. In some examples, as illustrated in Figure 11, the first output radiation and the second output radiation may be provided as a single beam 1119 output by the spectral broadening element 1104.

Following spectral broadening (e.g. by the spectral broadening element 1104 illustrated in Figure 11, and/or by the method 1600 illustrated in Figure 16), the two beams (i.e. the first output radiation and the second output radiation) having different (broadened) wavelength spectra may be separated spatially (e.g. using dichroic optics) and directed to a temporal compression stage comprising separate temporal compression elements for each beam. However, in some examples, the temporal compression stage may comprise a single temporal compression element configured to receive both beams.

An example of a temporal compression element (also referred to herein as a system) configured to receive two radiation beams having different spectra will now be described.

Figure 17 illustrates an example implementation of a temporal compression element 1706 configured to receive first input radiation and second input radiation, shown in Figure 17 as a single coaxial beam 1717. It will be understood that the temporal compression element 1706 is illustrated in Figure 17, and described herein, as a standalone system. However, the temporal compression element may form part of a system such as the system illustrated in Figure 8. For example, the first and second input radiation 1717 illustrated in Figure 17 may correspond to the first and second output radiation 1119 provided by the spectral broadening element 1104 illustrated in Figure 11.

As shown in Figure 17, the temporal compression element 1706 receives both the first input radiation and the second input radiation (e.g. as the single beam 1717). The first input radiation has a first spectrum, and the second input radiation has a second spectrum, different from the first spectrum. The temporal compression element 1706 is able to temporally shorten a pulse of the first input radiation to produce first output radiation, and to temporally shorten a pulse of the second input radiation to produce second output radiation. As shown in Figure 17, the first output radiation and the second output radiation may be provided as a single beam 1719 output by the temporal compression element 1706.

Examples of suitable compression elements may comprise chirped-mirror compressors, grating compressors, and/or prism compressors.

A chirped-mirror compressor works by the principle that the mirrors are equipped with a multilayer stack that reflects different frequencies, or wavelengths, around a central frequency at different depths in the stack. Thus, to make a chirped-mirror compressor suitable for simultaneous temporal compression of radiation pulses at two different wavelengths, in some examples, the mirrors may be equipped with a first multilayer stack configured to reflect radiation having the first spectrum, and a second multilayer stack configured to reflect radiation having the second spectrum. In some examples, the first multilayer stack and the second multilayer stack may be arranged such that the first multilayer stack is on top of the second multilayer stack and disposed on a same mirror, wherein the first multilayer stack is transparent to radiation having the second spectrum. In other examples, the first multilayer stack and the second multilayer stack may be disposed on separate mirrors.

Grating compressors and prism compressors work by the principle that a pair of dispersive elements (gratings or prisms) separate different frequencies into different paths with different lengths, after which an end mirror reflects all frequency components back through the dispersive elements, which then recombine all components back onto the same path. According to the present disclosure, the dispersive element(s) and the end mirror is large enough to be suitable for simultaneous temporal compression of radiation pulses having both the first spectrum and the second spectrum (for example, fundamental and second harmonic pulses). In case of imperfect compression of one of the two colors due to e.g. nonparaxial effects or nonlinear prism material dispersion, one may potentially detune the amount of compression of both colors independently by splitting the second dispersive element in two independent parts and adjusting the position of these parts independently.

In some examples, the temporal compression element 1706 is designed around some fixed amount of compression for fundamental and second harmonic, in some fixed ratio. Depending on the broadening process, this fixed ratio may not correspond to the compression ratio that is required to fully compress both the first input radiation and the second input radiation at the same time. In this case, one may add an adjustable amount of extra chirp in both colors independently by inserting wedges of different materials in the common beam path between the broadening unit and the compression unit.

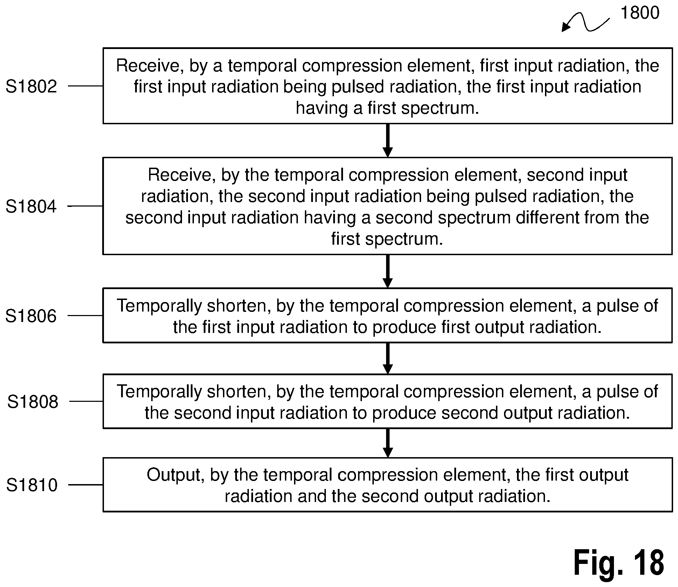

Figure 18 depicts a flow diagram of steps in a further method 1800 of providing output radiation according to the present disclosure. In some examples, the method 1800 may be carried out using the temporal compression element 1706 illustrated in Figure 17.

At S1802, the method 1800 comprises receiving, by a temporal compression element, first input radiation, the first input radiation being pulsed radiation, the first input radiation having a first spectrum.

At S1804, the method 1800 comprises receiving, by the temporal compression element, second input radiation, the second input radiation being pulsed radiation, the second input radiation having a second spectrum different from the first spectrum.

In some examples, the second input radiation may be generated from the first input radiation by a nonlinear process such as SHG. In some examples, the first input radiation and/or the second input radiation may have been broadened, e.g. by a spectral broadening element as described herein.

At S1806, the method 1800 comprises temporally shortening, by the temporal compression element, a pulse of the first input radiation to produce first output radiation. That is, the first output radiation corresponds to the first input radiation following temporal shortening of a pulse of the first input radiation.

At S1808, the method 1800 comprises temporally shortening, by the temporal compression element, a pulse of the second input radiation to produce second output radiation. That is, the second output radiation corresponds to the second input radiation following temporal shortening of a pulse of the second input radiation.

At S1810, the method 1800 comprises outputting, by the temporal compression element, the first output radiation and the second output radiation. In some examples, as illustrated in Figure 17, the first output radiation and the second output radiation may be provided as a single beam 1719.

An embodiment may include a computer program containing one or more sequences of machine-readable instructions describing a method of optical metrology and/or a method of analyzing a measurement to obtain information about a lithographic process. An embodiment may comprise computer code containing one or more sequences of machine-readable instructions or data describing the method. This computer program or code may be executed for example within unit MPU in the apparatus of Figure 6 and/or the control unit CL of Figure 3. There may also be provided a data storage medium (e.g., semiconductor memory, magnetic or optical disk, etc.) having such a computer program or code stored therein. Where an existing metrology apparatus, for example of the type shown in Figure 6, is already in production and/or in use, an embodiment of the invention can be implemented by the provision of an updated computer program product for causing a processor to perform one or more of the methods described herein. The computer program or code may optionally be arranged to control the optical system, substrate support and the like to perform a method of measuring a parameter of the lithographic process on a suitable plurality of targets. The computer program or code can update the lithographic and/or metrology recipe for measurement of further substrates. The computer program or code may be arranged to control (directly or indirectly) the lithographic apparatus for the patterning and processing of further substrates.

The illumination source may be provided in for example a metrology apparatus MT, an inspection apparatus, a lithographic apparatus LA, and/or a lithographic cell LC.

The properties of the emitted radiation used to perform a measurement may affect the quality of the obtained measurement. For example, the shape and size of a transverse beam profile (cross-section) of the radiation beam, the intensity of the radiation, the power spectral density of the radiation etc., may affect the measurement performed by the radiation. It is therefore beneficial to have a source providing radiation that has properties resulting in high quality measurements.

Further embodiments are disclosed in the subsequent numbered clauses:
1. A system for receiving pulsed pump radiation and providing output radiation, the system comprising:
   a first nonlinear optical component configured to convert a first portion of the pump radiation into converted radiation via a first nonlinear process;
   a spectral broadening stage configured to broaden a radiation spectrum of the converted radiation, and to broaden a radiation spectrum of a second portion of the pump radiation;
   a temporal compression stage configured to temporally shorten a pulse of the converted radiation, and to temporally shorten a pulse of the second portion of the pump radiation; and
   a second nonlinear component configured to receive the converted radiation and the second portion of the pump radiation, the second nonlinear component being further configured to generate output radiation via a second nonlinear process.
2. A system according to clause 1, wherein the spectral broadening stage comprises a single spectral broadening element configured to receive both the converted radiation and the second portion of the pump radiation.
3. A system according to clause 1, wherein the spectral broadening stage comprises:
   a first spectral broadening element configured to receive the second portion of the pump radiation, and to broaden the radiation spectrum of the second portion of the pump radiation; and
   a second spectral broadening element configured to receive the converted radiation, and to broaden the radiation spectrum of the converted radiation.
4. A system according to any one of the preceding clauses, wherein the temporal compression stage comprises a single temporal compression element configured to receive both the converted radiation and the second portion of the pump radiation.
5. A system according to any one of clauses 1 to 3, wherein the temporal compression stage comprises:
   a first temporal compression element configured to receive the second portion of the pump radiation, and to temporally shorten the pulse of the second portion of the pump radiation; and
   a second temporal compression element configured to receive the converted radiation, and to temporally shorten the pulse of the converted radiation.
6. A system according to any one of the preceding clauses, wherein the first nonlinear process comprises harmonic generation.
7. A system according to any one of the preceding clauses, wherein the second nonlinear process comprises high harmonic generation.
8. A system according to any one of the preceding clauses, wherein a pulse duration of the pump radiation received by the system is 100 fs or more.
9. A system according to any one of the preceding clauses, wherein, following temporal shortening by the first temporal compression element, a pulse duration of the second portion of the pump radiation is less than 40 fs.
10. A system according to any one of the preceding clauses, wherein, following temporal shortening by the second temporal compression element, a pulse duration of the converted radiation is less than 40 fs.
11. A system according to any one of the preceding clauses, wherein the output radiation includes radiation having a wavelength in the range 1-100 nm.
12. A metrology apparatus comprising the system of any one of the preceding clauses.
13. A method of providing output radiation, the method comprising:
   receiving pulsed pump radiation;
   converting a first portion of the pump radiation into converted radiation via a first nonlinear process;
   spectrally broadening a second portion of the pump radiation;
   temporally shortening a pulse of the second portion of the pump radiation;
   spectrally broadening the converted radiation;
   temporally shortening a pulse of the converted radiation; and
   generating output radiation from the converted radiation and the second portion of the pump radiation via a second nonlinear process.
14. A method according to clause 13, comprising spectrally broadening the converted radiation, and the second portion of the pump radiation, via a single spectral broadening element configured to receive both the converted radiation and the second portion of the pump radiation.
15. A method according to clause 13, comprising:
   spectrally broadening the second portion of the pump radiation via a first spectral broadening element, the first spectral broadening element being configured to receive the second portion of the pump radiation; and
   spectrally broadening the converted radiation via a second spectral broadening element, the second spectral broadening element being configured to receive the converted radiation.
16. A method according to any one of clauses 13 to 15, comprising temporally shortening the pulse of the converted radiation, and temporally shortening the pulse of the second portion of the pump radiation, via a single temporal compression element configured to receive both the converted radiation and the second portion of the pump radiation.
17. A method according to any one of clauses 13 to 15, comprising:
   temporally shortening the pulse of the second portion of the pump radiation via a first temporal compression element, the first temporal compression element being configured to receive the second portion of the pump radiation; and
   temporally shortening the pulse of the converted radiation via a second temporal compression element, the second temporal compression element being configured to receive the converted radiation.
18. A method according to any one of clauses 13 to 17, wherein the first nonlinear process comprises harmonic generation.
19. A method according to any one of clauses 13 to 18, wherein the second nonlinear process comprises high harmonic generation.
20. A method according to any one of clauses 13 to 19, wherein a pulse duration of the received pump radiation is 100 fs or more.
21. A method according to any one of clauses 13 to 20, wherein, following the temporal shortening of the pulse of the second portion of the pump radiation, a pulse duration of the second portion of the pump radiation is less than 40 fs.
22. A method according to any one of clauses 13 to 21, wherein, following the temporal shortening of the pulse of the converted radiation, a pulse duration of the converted radiation is less than 40 fs.
23. A method according to any one of clauses 13 to 22, wherein the output radiation includes radiation having a wavelength in the range 1-100 nm.
24. A system for receiving input radiation and providing output radiation, the system comprising a spectral broadening element, the spectral broadening element being configured to:
   receive first input radiation, the first input radiation having a first spectrum;
   receive second input radiation, the second input radiation having a second spectrum different from the first spectrum;
   broaden the first spectrum to produce first output radiation, the first output radiation having the broadened first spectrum;
   broaden the second spectrum to produce second output radiation, the second output radiation having the broadened second spectrum; and
   output the first output radiation and the second output radiation.
25. A system according to clause 24, wherein the spectral broadening element comprises a hollow core optical fiber.
26. A system according to clause 25, comprising a lens arranged to direct the first input radiation and the second input radiation into the hollow core optical fiber, the lens being substantially transmissive to radiation having the first spectrum and to radiation having the second spectrum.
27. A system according to clause 25 or 26, comprising a focusing mirror arranged to direct the first input radiation and the second input radiation into the hollow core optical fiber, the focusing mirror being substantially reflective to radiation having the first spectrum and to radiation having the second spectrum.
28. A system according to any one of clauses 24 to 27, wherein the spectral broadening element comprises a multipass cell.
29. A system according to clause 28, wherein the multipass cell comprises one or more mirrors, the one or more mirrors being substantially reflective to radiation having the first spectrum and to radiation having the second spectrum.
30. A system according to any one of clauses 24 to 29, wherein the second input radiation corresponds to a harmonic of the first input radiation.
31. A method of providing output radiation, the method comprising:
   receiving, by a spectral broadening element, first input radiation, the first input radiation having a first spectrum;
   receiving, by the spectral broadening element, second input radiation, the second input radiation having a second spectrum different from the first spectrum; and
   broadening, by the spectral broadening element, the first spectrum to produce first output radiation, the first output radiation having the broadened first spectrum;
   broadening, by the spectral broadening element, the second spectrum to produce second output radiation, the second output radiation having the broadened second spectrum; and
   outputting, by the spectral broadening element, the first output radiation and the second output radiation.
32. A method according to clause 31, wherein the spectral broadening element comprises a hollow core optical fiber.
33. A method according to clause 32, comprising a lens arranged to direct the first input radiation and the second input radiation into the hollow core optical fiber, the lens being substantially transmissive to radiation having the first spectrum and to radiation having the second spectrum.
34. A method according to clause 32 or 33, comprising a focusing mirror arranged to direct the first input radiation and the second input radiation into the hollow core optical fiber, the focusing mirror being substantially reflective to radiation having the first spectrum and to radiation having the second spectrum.
35. A method according to any one of clauses 31 to 34, wherein the spectral broadening element comprises a multipass cell.
36. A method according to clause 35, wherein the multipass cell comprises one or more mirrors, the one or more mirrors being substantially reflective to radiation having the first spectrum and to radiation having the second spectrum.
37. A method according to any one of clause 31 to 36, wherein the second input radiation corresponds to a harmonic of the first input radiation.
38. A system for receiving pulsed input radiation and providing output radiation, the system comprising a temporal compression element, the temporal compression element being configured to:
   receive first input radiation, the first input radiation having a first spectrum;
   receive second input radiation, the second input radiation having a second spectrum different from the first spectrum;
   temporally shorten a pulse of the first input radiation to produce first output radiation;
   temporally shorten a pulse of the second spectrum to produce second output radiation; and
   output the first output radiation and the second output radiation.
39. A method of providing output radiation, the method comprising:
   receiving, by a temporal compression element, first input radiation, the first input radiation being pulsed radiation, the first input radiation having a first spectrum;
   receiving, by the temporal compression element, second input radiation, the second input radiation being pulsed radiation, the second input radiation having a second spectrum different from the first spectrum; and
   temporally shortening, by the temporal compression element, a pulse of the first input radiation to produce first output radiation;
   temporally shortening, by the temporal compression element, the second radiation to produce second output radiation; and
   outputting, by the temporal compression element, the first output radiation and the second output radiation.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments in the context of a lithographic apparatus, embodiments may be used in other apparatus. Embodiments may form part of a mask inspection apparatus, a metrology apparatus, or any apparatus that measures or processes an object such as a wafer (or other substrate) or mask (or other patterning device). These apparatuses may be generally referred to as lithographic tools. Such a lithographic tool may use vacuum conditions or ambient (non-vacuum) conditions.

Although specific reference may be made in this text to embodiments in the context of an inspection or metrology apparatus, embodiments may be used in other apparatus. Embodiments may form part of a mask inspection apparatus, a lithographic apparatus, or any apparatus that measures or processes an object such as a wafer (or other substrate) or mask (or other patterning device). The term "metrology apparatus" (or "inspection apparatus") may also refer to an inspection apparatus or an inspection system (or a metrology apparatus or a metrology system). E.g. the inspection apparatus that comprises an embodiment may be used to detect defects of a substrate or defects of structures on a substrate. In such an embodiment, a characteristic of interest of the structure on the substrate may relate to defects in the structure, the absence of a specific part of the structure, or the presence of an unwanted structure on the substrate.

Although specific reference may have been made above to the use of embodiments in the context of optical lithography, it will be appreciated that the invention, where the context allows, is not limited to optical lithography and may be used in other applications, for example imprint lithography.

While the targets or target structures (more generally structures on a substrate) described above are metrology target structures specifically designed and formed for the purposes of measurement, in other embodiments, properties of interest may be measured on one or more structures which are functional parts of devices formed on the substrate. Many devices have regular, grating-like structures. The terms structure, target grating and target structure as used herein do not require that the structure has been provided specifically for the measurement being performed. Further, pitch of the metrology targets may be close to the resolution limit of the optical system of the scatterometer or may be smaller, but may be much larger than the dimension of typical non-target structures optionally product structures made by lithographic process in the target portions C. In practice the lines and/or spaces of the overlay gratings within the target structures may be made to include smaller structures similar in dimension to the non-target structures.

While specific embodiments have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

Although specific reference is made to HXR, SXR and EUV electromagnetic radiations, it will be appreciated that the invention, where the context allows, may be practiced with all electromagnetic radiations, including radio waves, microwaves, infrared, (visible) light, ultraviolet, X-rays, and gamma rays.

Additional objects, advantages and features of the present invention are set forth in this specification, and in part will become apparent to those skilled in the art on examination of the following, or may be learned by practice of the invention. The inventions disclosed in this application are not limited to any particular set of, or combination of, objects, advantages and features. It is contemplated that various combinations of the stated objects, advantages and features make up the inventions disclosed in this application.

## Claims

1. A system for receiving pulsed pump radiation and providing output radiation, the system comprising:
a first nonlinear optical component configured to convert a first portion of the pump radiation into converted radiation via a first nonlinear process;
a spectral broadening stage configured to broaden a radiation spectrum of the converted radiation, and to broaden a radiation spectrum of a second portion of the pump radiation;
a temporal compression stage configured to temporally shorten a pulse of the converted radiation, and to temporally shorten a pulse of the second portion of the pump radiation; and
a second nonlinear component configured to receive the converted radiation and the second portion of the pump radiation, the second nonlinear component being further configured to generate output radiation via a second nonlinear process.

2. A system according to claim 1, wherein the spectral broadening stage comprises a single spectral broadening element configured to receive both the converted radiation and the second portion of the pump radiation.

3. A system according to claim 1, wherein the spectral broadening stage comprises:
a first spectral broadening element configured to receive the second portion of the pump radiation, and to broaden the radiation spectrum of the second portion of the pump radiation; and
a second spectral broadening element configured to receive the converted radiation, and to broaden the radiation spectrum of the converted radiation.

4. A system according to any one of the preceding claims, wherein the temporal compression stage comprises a single temporal compression element configured to receive both the converted radiation and the second portion of the pump radiation.

5. A system according to any one of claims 1 to 3, wherein the temporal compression stage comprises:
a first temporal compression element configured to receive the second portion of the pump radiation, and to temporally shorten the pulse of the second portion of the pump radiation; and
a second temporal compression element configured to receive the converted radiation, and to temporally shorten the pulse of the converted radiation.

6. A system according to any one of the preceding claims, wherein a pulse duration of the pump radiation received by the system is 100 fs or more.

7. A system according to any one of the preceding claims, wherein, following temporal shortening by the first temporal compression element, a pulse duration of the second portion of the pump radiation is less than 40 fs.

8. A system according to any one of the preceding claims, wherein, following temporal shortening by the second temporal compression element, a pulse duration of the converted radiation is less than 40 fs.

9. A metrology apparatus comprising the system of any one of the preceding claims.

10. A method of providing output radiation, the method comprising:
receiving pulsed pump radiation;
converting a first portion of the pump radiation into converted radiation via a first nonlinear process;
spectrally broadening a second portion of the pump radiation;
temporally shortening a pulse of the second portion of the pump radiation;
spectrally broadening the converted radiation;
temporally shortening a pulse of the converted radiation; and
generating output radiation from the converted radiation and the second portion of the pump radiation via a second nonlinear process.

11. A method according to claim 10, comprising spectrally broadening the converted radiation, and the second portion of the pump radiation, via a single spectral broadening element configured to receive both the converted radiation and the second portion of the pump radiation.

12. A method according to claim 10, comprising:
spectrally broadening the second portion of the pump radiation via a first spectral broadening element, the first spectral broadening element being configured to receive the second portion of the pump radiation; and
spectrally broadening the converted radiation via a second spectral broadening element, the second spectral broadening element being configured to receive the converted radiation.

13. A method according to any one of claims 10 to 12, comprising temporally shortening the pulse of the converted radiation, and temporally shortening the pulse of the second portion of the pump radiation, via a single temporal compression element configured to receive both the converted radiation and the second portion of the pump radiation.

14. A method according to any one of claims 10 to 12, comprising:
temporally shortening the pulse of the second portion of the pump radiation via a first temporal compression element, the first temporal compression element being configured to receive the second portion of the pump radiation; and
temporally shortening the pulse of the converted radiation via a second temporal compression element, the second temporal compression element being configured to receive the converted radiation.

15. A method according to any one of claims 10 to 14, wherein the first nonlinear process comprises harmonic generation.
